(19) Europäisches Patentamt
European Patent Office
Office européen des brevets

(11) EP 3 505 550 B1

(12) **EUROPÄISCHE PATENTSCHRIFT**

(45) Veröffentlichungstag und Bekanntmachung des Hinweises auf die Patenterteilung:
**22.06.2022 Patentblatt 2022/25**

(21) Anmeldenummer: **18212170.7**

(22) Anmeldetag: **13.12.2018**

(51) Internationale Patentklassifikation (IPC):
***C08G 59/14*** *(2006.01)*

(52) Gemeinsame Patentklassifikation (CPC):
**C08G 59/1444; C08G 59/1483; C08G 59/1488**

(54) **NETZ- UND DISPERGIERMITTEL MIT RHEOLOGISCHER EIGENSCHAFT**

WETTING AND DISPERSING AGENT WITH RHEOLOGICAL PROPERTY

AGENTS MOUILLANTS ET DISPERSANTS PRÉSENTANT DES PROPRIÉTÉS RHÉOLOGIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.12.2017 EP 17210626**

(43) Veröffentlichungstag der Anmeldung:
**03.07.2019 Patentblatt 2019/27**

(73) Patentinhaber: **Evonik Operations GmbH**
**45128 Essen (DE)**

(72) Erfinder:
- **Favresse, Philippe**
**40880 Ratingen (DE)**
- **Grewing, Manuela**
**47441 Moers (DE)**
- **Kleinsteinberg, Frank**
**46519 Alpen (DE)**
- **Rödiger, Sandra**
**44795 Bochum (DE)**
- **Flock, Birgit**
**45219 Essen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**WO-A1-93/12187**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 505 550 B1

## Beschreibung

Die vorliegende Erfindung betrifft Polyadditionsverbindungen und deren Salze, deren Herstellungsverfahren sowie Verwendung als Netz- und Dispergiermittel mit rheologischer Eigenschaft.

Es ist eine Vielzahl von verschiedenen Substanzen bekannt, die heute Verwendung als Netz- und Dispergiermittel für Pigmente und/oder Füllstoffe finden.

Um Pigmente und/oder Füllstoffe in flüssigen Medien einzubringen, sind hohe mechanische Kräfte notwendig. Jedoch neigen die Pigmente und Füllstoffe, nach dem Dispergierprozess aufgrund gegenseitiger Anziehungskräfte wieder zu reagglomerieren, was den zuvor aufgewendeten Dispergieraufwand zunichtemacht und zu gravierenden anwendungstechnischen Problemen führt.

Es ist bekannt, Dispergiermittel einzusetzen, um die Einarbeitung von Pigmenten und Füllstoffen zu erleichtern. Hierbei handelt es sich um oberflächenaktive Stoffe, auch Tenside oder Makrotenside genannt. Diese Stoffe werden in geringen Mengen entweder auf den Feststoff direkt aufgebracht oder dem Dispergiermedium zugesetzt.

Aus dem Stand der Technik sind auch polymere Netz- und Dispergiermittel bekannt, die zum einen pigmentaffine Gruppen wie Carboxyl-, Amino- oder Phenylfunktionalitäten und zum anderen im Medium lösliche Seitenketten enthalten. Die pigmentaffinen Gruppen sollen eine schnelle Orientierung an die Oberfläche der Pigmente sowie eine hohe Permanenz auf ihr besitzen. Die Seitenketten sorgen für die Kompatibilität mit dem Dispergiermedium und für eine sterische Stabilisierung der dispergierten Phase.

Bei der Herstellung von Pigmentpräparationen beispielsweise werden Dispergiermittel eingesetzt, die die Pigmentteilchen in ihrer feinteiligen Form in einem wässrigen oder wässrig/organischen Medium physikalisch stabilisieren. Für die Auswahl der Dispergiermittel ist daneben die Verträglichkeit in den verschiedenen Anwendungsmedien essentiell.

Einen Überblick über die verschiedenen Dispergiermittel findet sich in der EP 0 318 999. Beispielsweise werden neben einfachen niedermolekularen Verbindungen wie Lecithin, Fettsäuren und deren Salze sowie Alkyphenolethoxylaten auch komplexe Strukturen als Netz- und Dispergiermittel eingesetzt.

WO93/12187 A1 offenbart in Beispiel 22 eine Farbformulierung hergestellt aus einer ersten Zusammensetzung und einer zweiten Zusammensetzung, wobei die erste Zusammensetzung ein aminteminierter Härter ist, der mit Ameisensäure modifiziert wurde.

Die EP 1 486 524 A1 beschreibt die Herstellung von Epoxid Amin-Addukten und deren Salzen zur Verwendung als Dispergiermittel. Diese sind erhältlich durch die Umsetzung mono- oder polyfunktioneller, aromatischer Epoxide mit Polyoxyalkylenmonoaminen.

Die EP 1 745 104 A1 offenbart kammartige Polyetheralkanolamine als Dispergiermittel für Tinten und Druckfarben. In der WO 2016/059066 werden Kamm-Copolymere auf der Basis von Epoxy Amin- Addukten beschrieben.

Es wurde des Weiteren beobachtet, dass deflockulierte Partikel stärker zum Absetzen tendieren als agglomerierte Stoffe. Insbesondere bei schweren Materialien, wie Zinkstaub und Metalloxiden, kann dies zu einem unerwünschten harten Absetzen führen. Um dem entgegenzuwirken, muss die Rheologie des Pigmentkonzentrats modifiziert werden. Daher werden zusätzlich Rheologieadditive eingesetzt, um ein thixotropes Verhalten mit einem Elastizitätsanteil zu erzielen.

Das Additiv selbst darf die Beschichtungseigenschaften nicht verschlechtern. Stattdessen sollte es die Funktion des Pigments im Beschichtungssystem jeweils verstärken. Glanzverluste und Farbtonverschiebungen in Lacken und Beschichtungen und ungenügende Farbkraftentwicklung sollen vermieden werden.

Typische Verdickungsmittel sind für wässrige Systeme z.B. Cellulosederivate (beispielsweise Methylcellulose, Ethylhydroxypropylcellulose) oder Polyacrylate und werden im Allgemeinen in Dispersionsfarben verwendet: Polyurethanverdicker (assoziative Verdickungsmittel) mit günstigeren Nivellierungseigenschaften werden auch zunehmend in Formulierungen eingesetzt.

Eine große Anzahl von rheologischen Additiven für lösemittelbasierte Systeme sind im Handel erhältlich, wie z.B. hydrierte Rizinusöle, pyrogene Kieselsäure, modifizierte Harnstoffe und modifizierte Montmorillonite (Organotone, Bentonit).

Die rheologische Wirkung der obigen Additive basiert auf der Tatsache, dass dreidimensionale Netzwerkstrukturen über Wasserstoffbrücken in Farbformulierungen gebildet werden. Diese dreidimensionalen Netzwerkstrukturen werden durch die Einbringung von Scherkräften zerstört, bilden sich aber wieder, wenn die Farbformulierung nicht mehr geschert wird, auch wenn diese Wiederherstellung nicht sofort passiert. Die steigende Viskosität über die Zeit ermöglicht aber zunächst eine Nivellierung der Oberfläche und verhindert ein Absacken der Pigmente und Feststoffe. Diese zeitabhängige Veränderung der Viskosität wird als Thixotropie bekannt. In Lacken ist Thixotropie wünschenswerter als rein strukturviskoses Fließverhalten, weil es einen Kompromiss erlaubt zwischen Absacken der Pigmente oder Füllstoffe und Nivellierung des Lackes.

Herkömmliche Netz- und Dispergiermittel vermögen nicht, Dispergier- und rheologische Eigenschaften in einem Additiv zu vereinen. Es besteht somit ein Bedarf an Netz- und Dispergiermitteln, die Dispergiereigenschaften in wässrigen und/oder lösungsmittelhaltigen Systemen erlauben, aber entsprechend auch eine Fließgrenze aufweisen.

Die Aufgabe der vorliegenden Erfindung ist daher die Bereitstellung von Verbindungen, die als Dispergiermittel geeignet sind und zudem in wässrige und/oder lösungsmittelhaltige Systeme rheologische Eigenschaften aufweisen, so dass die Feststoffe sich nicht nennenswert absetzen, und keine Einbuße in den technischen Anwendungstests, wie etwa der Farbstärke oder Rub-out, aufweisen.

Zur Lösung der Aufgabe werden aminfreie Polyadditionsverbindungen und deren Salze der eingangs genannten Art vorgeschlagen, welche durch die Umsetzung von

- Epoxidharz auf Basis von mindestens einem Diglycidylether gemäß der Formel (I)

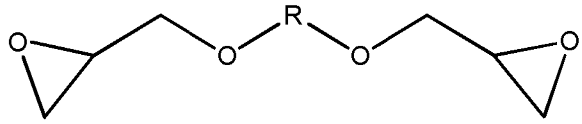

Formel (I)

mit R = einen zweiwertigen aliphatischen oder einkernigen aromatischen oder zweikernigen aromatischen Rest oder Mischungen davon,

- mit mindestens einem Polyetheralkohol der allgemeinen Formel (II)

$$R^1\text{-[OEt]}_n\text{-[OPr]}_m\text{-[OBu]}_s\text{-[OSO]}_r\text{-OH} \quad \text{Formel (II)},$$

mit $R^1$ = unabhängig voneinander gleiche oder verschiedene lineare oder verzweigte, gegebenenfalls aromatische Kohlenwasserstoffreste mit 1 bis 18 Kohlenstoffatomen, bevorzugt Methyl, Butyl, Octyl, Decyl, Dodecyl, Tetradecyl, Octadecyl oder Mischungen davon,
mit [OEt] = Ethylenoxid-Rest.
mit [OPr] = Propylenoxid-Rest,
mit [OBu] = Butylenoxid-Rest,
mit [OSO] = Styroloxid-Rest,
mit n = 0 bis 100, bevorzugt n = 1 - 80, besonders bevorzugt n = 10 - 50,
m = 0 bis 50, bevorzugt m = 0 - 35, besonders bevorzugt m = 0 - 25,
s = 0 bis 20, bevorzugt s = 0 - 15, besonders bevorzugt s = 0 - 10 und
r = 0 bis 3,
mit der Maßgabe, dass n+m+s+r = 3 - 103, bevorzugt n+m+s+r = 4 - 60, besonders bevorzugt n+m+s+r = 5 - 40 beträgt,
und

- mit mindestens einer Verbindung, die mindestens eine funktionelle Gruppe ausgewählt aus Sulfatgruppen, Sulfonatgruppen, Carboxylatgruppen oder Phosphatgruppen enthält, erhältlich sind.

Es hat sich herausgestellt, dass die erfindungsgemäße Polyadditionsverbindungen und deren Salze insbesondere als Netz- und Dispergiermittel mit rheologischer Eigenschaft sowohl für wässrige als auch für lösungsmittelhaltige Systeme verwendet werden können.

Es wird vermutet, dass diese universellen Eigenschaften aus der Umsetzung der freien OH-Gruppen der Polyetheralkohole gemäß Formel (II) mit den funktionellen Gruppen, wie Sulfatgruppe, Sulfonatgruppe, Carboxylatgruppe oder Phosphatgruppe, resultieren.

Vorteilhafterweise können die erfindungsgemäßen Polyadditionsverbindungen und deren Salze auf aminfreier Basis hergestellt werden, somit kann die Bildung von Nitrosaminen vermieden werden.

Epoxidharze werden z.B. aus der Umsetzung einer Epoxidverbindung wie z.B. Epichlorhydrin mit einem mehrfunktionellen Alkohol, d.h. einem Diol, Triol oder Polyol, erhalten. Je nach Reaktionsführung entstehen bei der Umsetzung von mehrfunktionellen Alkoholen mit einer Epoxidverbindung, wie z.B. Epichlorhydrin als Nebenprodukte auch die entsprechenden Hydroxy-Epoxidverbindungen in unterschiedlichen Konzentrationen. Diese lassen sich durch übliche Trennoperationen isolieren. Das bei der Glycidylisierungsreaktion von Polyolen erhaltene Produktgemisch kann aus vollständig und partiell zum Glycidylether reagiertem Polyol bestehen.

Besonders bevorzugt sind Epoxidharze auf Basis von Diglycidylether von Bisphenol A (BADGE), Bisphenol F oder Bisphenol A/F. Diese Epoxidharze sind in großem Umfang im Handel erhältlich. Sie können aus der Umsetzung von Bisphenol A, Bisphenol F oder Mischungen von Bisphenol A und Bisphenol F (auch als Bisphenol A/F bezeichnet) mit Epichlorhydrin erhalten werden. Es können je nach Reaktionsführung hoch- oder niedermolekulare Reaktionsprodukte hergestellt werden.

Bevorzugt sind Diglycidylether der Formel (I) ausgewählt aus Diglycidylether von difunktionellen gesättigten oder ungesättigten, verzweigten oder unverzweigten, zyklischen oder offenkettigen C2-C30-Alkoholen, wie beispielsweise Ethylenglykol, Butandiol, Hexandiol, Oktandiolgylcidylether, Cyclohexandimethanoldigylcidylether, Neopentylglycoldiglycidylether, Diglycidylether von difunktionellen, nieder- bis hochmolekularen Polyetherpolyolen wie beispielsweise Polyethylenglycol-diglycidylether, Polypropyleneglycol-diglycidyl- ether, Diglycidylether von difunktionellen Diphenolen und gegebenenfalls Triphenolen, wobei hierunter nicht nur reine Phenole, sondern gegebenenfalls auch substituierte Phenole verstanden werden. Die Art der Substitution kann sehr vielfältig sein. Insbesondere wird vorzugsweise hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Besonders bevorzugt sind als Bisphenole und gegebenenfalls Triphenolen ausgewählt aus 1,4-Dihydroxybenzol, 1,3-Dihydroxybenzol, 1,2-Dihydroxybenzol, 1,3-Dihydroxytoluol, 3,5-Dihydroxybenzoat,2,2-Bis(4-hydroxyphenyl)propan(Bisphenol-A), Bis(4-hydroxyphenyl)methan(Bisphenol-F), Bis(4-hydroxyphenyl)sulfon (Bisphenol-S), Naphtoresorcin, Dihydroxy- naphthalin, Dihydroxyanthrachinon, Dihydroxy-biphenyl, 3,3-Bis(p-hydroxyphenyl)-phthalide, 5,5-Bis(4-hydroxyphenyl)hexahydro-4,7-methanoindan, Phenolpthalein, Fluorescein, 4,4'-[Bis-(hydroxyphenyl)-I,3-phenylenebis-(I-methyl-ethyliden)] (Bisphenol-M), 4,4'-[Bis-(hydroxyphenyl)-I,4-phenylenebis-(I-methyl-ethyliden)] (Bisphenol-P), 2,2'-Diallyl-bisphenol-A, Diphenole und Dikresole hergestellt durch Umsetzung von Phenolen oder Kresolen mit Diisopropylidenbenzol, Phloroglucin, Gallsäureester, Phenol- oder Kresolnovolacke mit -OH-Funktionalität von 2,0 bis 3,5 sowie alle Isomeren der vorgenannten Verbindungen.

Es ist ebenso vorstellbar, Diglycidylether der Formel (A-I), sog. Epoxid-Flüssigharze, oder der Formel (A-II), sog. Epoxid-Festharze zu verwenden.

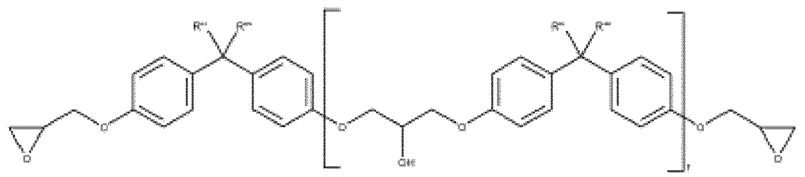

(A-I)

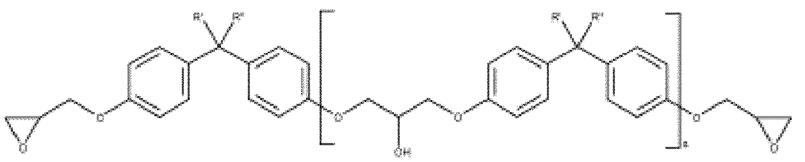

(A-II)

Hierbei stehen die Substituenten R', R", R‴ und R″″ unabhängig voneinander entweder für H oder $CH_3$. Weiterhin steht der Index r für einen Wert von 0 bis 1. Bevorzugt steht r für einen Wert von kleiner als 0,2. Weiterhin steht der Index s für einen Wert von > 1, insbesondere > 1,5, insbesondere von 2 bis 12. Verbindungen der Formel (A-II) mit einem Index s zwischen 1 und 1,5 werden vom Fachmann als Semisolid-Epoxidharze bezeichnet. Bevorzugt sind jedoch Epoxid-Festharze im engeren Sinn, d.h. wo der Index s einen Wert von > 1,5 aufweist.

Derartige Epoxid-Festharze sind kommerziell erhältlich, beispielsweise von Dow oder Huntsman oder Hexion. Handelsübliche Epoxid-Flüssigharze der Formel (A-I) wurden bereits vorstehend genannt.

Besonders bevorzugt handelt es sich beim Diglycidylether der Formel (I) um einen Epoxid-Flüssigharz, insbesondere um einen Diglycidylether von Bisphenol-A (BADGE), von Bisphenol-F oder von Bisphenol-A/F.

Bevorzugt können die [OEt]-, [OPr]-, [OBu], [OSO]-Reste, auch Alkylenoxid-Einheiten genannt, am Polyetheralkohol der allgemeinen Formel (II) in beliebiger Reihenfolge angeordnet sein. Hierzu zählt insbesondere eine statistische Reihenfolge oder die Anordnung in Form von [OEt]-, [OPr]-, [OBu]- und/oder [OSO]-Blöcken oder eine Anordnung in Form eines Gradienten, beispielsweise einer Anreicherung oder Abreicherung von [OEt]- oder den anderen Alkoxy-Einheiten entlang der Polyalkylenoxidkette.

Besonders bevorzugt gilt $n \geq m > s > r$. Ganz besonders bevorzugt ist $s = 0$.

Alkylenoxid-Einheiten sind vorzugsweise gewählt aus Ethylenoxid-, Propylenoxid-, Butylenoxid- und Stryroloxid Einheiten, worunter Ethylenoxid- und Propylenoxid- Einheiten bevorzugt sind.

Ist mehr als eine Alkylenoxid-Einheit im Alkylenoxid-Rest enthalten, so spricht man von einem Polyalkylenoxid-Rest. Polyalkylenoxid-Reste enthalten daher vorzugsweise 4 bis 60 besonders bevorzugt 5 bis 40 Alkylenoxid- Einheiten.

Besonders bevorzugt handelt es sich bei dem Rest R der Formel (II) um ein cyclischer, aliphatischer oder

aromatischer Rest, der hydriert oder nicht hydriert sein kann. Prinzipiell sind alle aromatischen und aliphatischen Reste möglich.

Vorzugsweise wird die Herstellung der erfindungsgemäßen Polyadditionsverbindungen und deren Salze in Gegenwart von Umsetzungskatalysatoren durchgeführt. Diese ermöglichen insbesondere die Umsetzung des Epoxidharzes gemäß Formel (I) mit dem Polyetheralkohol gemäß Formel (II).

Bevorzugt werden Umsetzungskatalysatoren aus Natriumhydroxid, Kaliumhydroxid, Lithiumhydroxid, Bariumhydroxid, Strontiumhydroxid, Alkalialkoholate wie Natriummethylat, Kaliumethylat, Lithiummethylat, Natriumethylat und Kaliumdodecylat sowie die Alkalisalze von Carbonsäuren, wie zum Beispiel Natrium- und Lithiumstearat, anorganische und organische Protonsäuren, zum Beispiel Phosphorsäure, Tetrafluorborsäure und Benzolsulfonsäure. Lewis-Säuren und deren Komplexe, wie Zinn(IV)chlorid, Titan(IV)chlorid, Titan(IV)isopropylat, Triäthyloxoniumtetrafluoroborat, und aliphatische, cycloaliphatische, Stickstoff-Heterocyclen ausgewählt.

Vorzugsweise werden die funktionelle Gruppen enthaltende Verbindungen aus Schwefelsäure, Chlorsulfonsäure oder Schwefeltrioxid zur Bildung von Sulfatgruppen, Polyphosphorsäure, Phosphorsäure, Phosphorpentoxid oder Phosphorpentachlorid zur Bildung von Phosphatgruppen, Säureandydrid oder Chloressigsäure zur Bildung von Carboxylatgruppen, Propansulton, Butansulton oder 3-Chloro-2-hydroxy-propansulfonsäure zur Bildung von Sulfonatgruppen, und/oder deren Salze, ausgewählt.

Ein weiterer Gegenstand der vorliegenden Erfindung ist ein Verfahren zur Herstellung der erfindungsgemäßen Polyadditionsverbindungen und deren Salze, wobei

- Epoxidharze auf Basis von mindestens einem Diglycidylether gemäß der Formel (I)

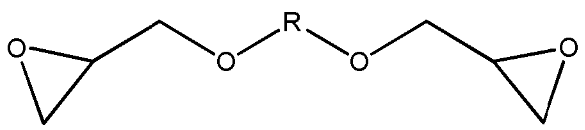

Formel (I)

mit R = einen zweiwertigen aliphatischen oder einkernigen aromatischen oder zweikernigen aromatischen Rest oder Mischungen davon,

- mit mindestens einem Polyetheralkohol der allgemeinen Formel (II)

$$R^1\text{-[OEt]}_n\text{-[OPr]}_m\text{-[OBu]}_s\text{-[OSO]}_r\text{-OH} \quad \text{Formel (II)},$$

mit $R^1$ = unabhängig voneinander gleiche oder verschiedene lineare oder verzweigte, gegebenenfalls aromatische Kohlenwasserstoffreste mit 1 bis 18 Kohlenstoffatomen, bevorzugt Methyl, Butyl, Octyl, Decyl, Dodecyl, Tetradecyl, Octadecyl oder Mischungen davon, mit [OEt] = Ethylenoxid-Rest,
mit [OPr] = Propylenoxid-Rest,
mit [OBu] = Butylenoxid-Rest,
mit [OSO] = Styroloxid-Rest,
mit n = 0 bis 100, bevorzugt n = 1 - 80, besonders bevorzugt n = 10 - 50,
m = 0 bis 50, bevorzugt m = 0 - 35, besonders bevorzugt m = 0 - 25,
s = 0 bis 20, bevorzugt s = 0 - 15, besonders bevorzugt s = 0 - 10 und r = 0 bis 3,
mit der Maßgabe, dass n+m+s+r = 3 - 103, bevorzugt n+m+s+r = 4 - 60, besonders bevorzugt n+m+s+r = 5 - 40 beträgt,

bei einer Temperatur zwischen 25°C und 300 °C, bevorzugt 40°C und 200°C, besonders bevorzugt 50°C und 100°C zur Reaktion gebracht werden, anschließend mit mindestens einer Verbindung, die mindestens eine funktionelle Gruppe ausgewählt aus Sulfatgruppen, Sulfonatgruppen, Carboxylatgruppen oder Phosphatgruppen enthält, umgesetzt wird.

Hierbei werden vorzugsweise entweder die Epoxidharze gemäß Formel (I) und Polyetheralkohole gemäß Formel (II) vorgelegt und auf die Reaktionstemperatur erhitzt oder es wird zunächst Polyetheralkohole gemäß Formel (II) vorgelegt und die Epoxidharze gemäß Formel (I) als Mischung oder sequenziell hinzugegeben oder über einen Zeitraum zudosiert.

Um einen partiellen oder vollständigen Umsatz von Epoxidharzen gemäß Formel (I) und Polyetheralkohole gemäß Formel (II) zu gewährleisten, sollte das molare Verhältnis beider Verbindungen zueinander beachtet werden. Hierbei werden die Epoxy-Gruppen der Diglycidylether gemäß Formel (I) und die OH-Gruppen der Polyetheralkohole gemäß Formel (II) zugrunde gelegt.

Vorzugsweise beträgt das molare Verhältnis der Epoxy-Gruppen von Diglycidylether gemäß Formel (I) zu den OH-Gruppen der Polyetheralkoholen gemäß Formel (II) 1,0 : 0,5 bis 1,0 : 4,0, bevorzugt 1,0 : 1,0 bis 1,0 : 2,0.

Vorzugsweise wird die funktionelle Gruppen enthaltende Verbindung aus Schwefelsäure, Chlorsulfonsäure oder Schwefeltrioxid zur Bildung von Sulfatgruppen, Polyphosphorsäure, Phosphorsäure, Phosphorpentoxid oder Phosphorpentachlorid zur Bildung von Phosphatgruppen, Säureandydrid oder Chloressigsäure zur Bildung von Carboxylatgruppen, Propansulton, Butansulton oder 3-Chloro-2-hydroxy-propansulfonsäure zur Bildung von Sulfonatgruppen, und/oder deren Salze, ausgewählt.

Beispielsweise können bevorzugt anionische Gruppen dadurch in die erfindungsgemäßen Polyadditionsverbindungen und deren Salze eingeführt werden, dass diese ausgehend von freien OH-Gruppen der Polyetheralkohole gemäß Formel (II) erzeugt werden. Sulfonatgruppen können durch Vinyladdition oder Substitutionsreaktion eingeführt werden, wobei entsprechende Spacer OX erzeugt werden. Alternativ kann die freie OH Gruppe auch vorher in ein Chlorid umgewandelt werden, das anschließend einer direkten Sulfonierung zugänglich ist. Carboxylate können beispielsweise durch Umsetzung mit Chloracetat, Anhydriden, Acrylat oder substituierte Acrylate H 2C=(R’)C(0)0 <">, wobei R’ H oder ein Alkylrest mit 1 bis 4 Kohlenstoffatomen ist, erhalten werden. Grundsätzlich setzt sich die anionische Gruppe, welche eine Sulfat-, Sulfonat-, Carboxylat- oder Phosphatgruppe ist, sowie dem Spacer OX zusammen, der im einfachsten Fall (o = 0) eine Einfachbindung sein kann.

Im Falle einer Sulfatgruppe kann man beispielsweise auf die Umsetzung mit Schwefelsäure, Chlorsulfonsäure oder Schwefeltrioxid im Fallfilmreaktor mit nachfolgender Neutralisierung zurückgreifen.

Im Falle einer Sulfonatgruppe kann man beispielsweise auf die Umsetzung mit Propansulton und nachfolgender Neutralisierung, mit Butansulton und nachfolgender Neutralisierung, mit Vinylsulfonsäure Natriumsalz oder mit 3-Chloro-2-hydroxy-propansulfonsäure-Natriumsalz zurückgreifen. Zur Herstellung von Sulfonaten kann auch die terminale OH-Gruppe in ein Chlorid beispielsweise mit Phosgen oder Thionylchlorid überführt und anschließend beispielsweise mit Sulfit umgesetzt werden.

Im Falle einer Carboxylatgruppe kann man beispielsweise auf die Oxidation des Alkohols mit Sauerstoff und nachfolgende Neutralisierung beziehungsweise die Umsetzung mit Chloressigsäurenatriumsalz oder Anhydriden zurückgreifen. Carboxylate können beispielsweise auch durch Michael Addition von (Meth)Acrylsäure oder -ester erhalten werden.

Phosphate können beispielsweise durch Veresterungsreaktion mit Phosphorsäure, Phosphorpentachlorid, Phosphorpentoxid oder Polyphosphorsäure erhalten werden.

Bevorzugt wird das erfindungsgemäße Verfahren in Gegenwart von Umsetzungskatalysatoren durchgeführt. Dabei wird bevorzugt der Umsetzungskatalysator dem Reaktionsgemisch zugegeben, um die Reaktion zwischen OH Gruppen und Epoxid Gruppen zu katalysieren.

Bevorzugt wird die Reaktion bis zum vollständigen Umsatz gefahren. Der Umsatz kann mittels NMR oder mittels der Bestimmung der Epoxid-Equivalent gemäß der DIN ISO 16945 entsprechend des Anwendungsgebiets bestimmt werden, so dass der Umsatz von partiell bis vollständig frei einstellbar ist.

Vorzugsweise kommen Umsetzungskatalysatoren ausgewählt aus Natriumhydroxid, Kaliumhydroxid, Lithiumhydroxid, Bariumhydroxid, Strontiumhydroxid, Alkalialkoholate wie Natriummethylat, Kaliumethylat, Lithiummethylat, Natriumethylat und Kaliumdodecylat sowie die Alkalisalze von Carbonsäuren, wie zum Beispiel Natrium- und Lithiumstearat, anorganische und organische Protonsäuren, zum Beispiel Phosphorsäure, Tetrafluorborsäure und Benzolsulfonsäure. Lewis-Säuren und deren Komplexe, wie Zinn(IV)chlorid, Titan(IV)chlorid, Titan(IV)isopropylat, Triäthyloxoniumtetrafluoroborat, und aliphatische, cycloaliphatische, araliphatische Stickstoff-Heterocyclen in Frage.

Bevorzugt werden Diglycidylether gemäß der Formel (I) aus Diglycidylethern von difunktionellen gesättigten oder ungesättigten, verzweigten oder unverzweigten, zyklischen oder offenkettigen C2-C30-Alkoholen, ausgewählt aus Ethylenglykol, Butandiol, Hexandiol, Oktandiolgylcidylethern, Cyclohexandimethanoldigylcidylethern oder Neopentylglycoldiglycidylethern, aus Diglycidylethern von difunktionellen, nieder- bis hochmolekularen Polyetherpolyolen, ausgewählt aus Polyethylenglycol-diglycidylethern oder Polypropyleneglycol-diglycidylethern, oder aus Diglycidylethern von difunktionellen unsubstituierten oder substituierten, einkernigen, mehrkernigen und/oder kondensierten Diphenolen oder Triphenolen, ausgewählt aus 1,4-Dihydroxybenzol, 1,3-Dihy- droxybenzol, 1,2-Dihydroxybenzol, 1,3-Dihydroxytoluol, 3,5-Dihydroxybenzoat, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxy- naphthalin, Dihydroxyanthrachinon, Dihydroxybiphenyl, 3,3-Bis(p-hydroxyphenyl)-phthalide, 5,5-Bis(4-hydroxyphenyl)hexahydro-4,7-methanoindan, Phenolpthalein, Fluorescein, 4,4’-[Bis-(hydroxyphenyl)-l,3-phenylenebis-(l-methyl-ethyliden)] (=Bis-phenol-M), 4,4’-[Bis-(hydroxyphenyl)-l,4-phenylenebis-(l-methyl-ethyliden)] (=Bisphenol-P), 2,2’-Diallyl-bisphenol-A ausgewählt.

Vorzugsweise kann nach der Umsetzung ein Neutralisationsschritt durchgeführt werden.

Erstaunlicherweise wurde festgestellt, dass die erfindungsgemäßen Polyadditionsverbindungen und deren Salze eine Fließgrenze in wässerige und/oder lösungsmittelhaltige Systeme aufweisen. Diese Eigenschaft erlaubt entsprechend nicht nur Pigment und/oder Feststoffe optimal in entsprechenden Formulierungen zu dispergieren, sondern dank der Fließgrenze wird ein Absetzen der Pigmente und/oder Feststoffe bei Lagerung unterdrückt. Somit muss keine

aufwendige Einarbeitung von organischen oder anorganischen rheologischen Additiven erfolgen.

Die Fließgrenze ist nach DIN 1342-1 "Viskosität - Rheologische Begriffe", Punkt 3.18 definiert als die kleinste Schubspannung oberhalb derer ein plastischer Stoff sich rheologisch wie eine Flüssigkeit verhält. Ergänzend ist die Definition als plastischer Stoff nach DIN 1342-3, Punkt 4.3: Ein deformierbarer Stoff heißt plastisch, wenn er sich in einem unteren Schubspannungsbereich wie ein starrer, elastischer oder viskoelastischer Festkörper, in einem oberen Schubspannungsbereich dagegen wie eine Flüssigkeit verhält. Die Schubspannung, bei der dieser Übergang stattfindet, wird als Fließgrenze (auch Fließspannung) bezeichnet.

Die Bestimmung der Fließgrenze kann durch die Aufnahme einer Fließkurve mit einem Rheometer erfolgen. Der erhaltene Wert hängt stark von der Empfindlichkeit des Messgerätes und den zeitlichen Vorgaben für den Messablauf (Belastungsrate) ab, die der Messung zugrunde liegt. Dies ist unabhängig davon, ob die Messung mit einem schubspannungs- oder drehzahlgesteuerten Viskosimeter erfolgt. Kurze Zeitskalen (schnelle Zunahme der Belastungen) ergeben in der Regel höhere Werte für die Fließgrenze. Bessere Ergebnisse für die Fließgrenze erhält man, wenn die Schubspannung bei so geringen Deformationsgeschwindigkeiten (und geringen Deformationen) erfasst werden kann, dass eine Auswertung der Schubspannung als Funktion der Deformation (oder umgekehrt) möglich ist (Quelle: Römpp 2005 - Fließgrenze - Sieghard Millow). Gemäß DIN Fachbericht Nr. 143 des NPF/NAB 21.1 "Rheologie" (Pigment und Füllstoffe) können mit der Tangentenschnittpunkt-Methode die Fließgrenzenwerte ermitteln werden.

Ferner ist ein weiterer Gegenstand der Erfindung eine Zusammensetzung enthaltend mindestens einen teilchenförmigen Feststoff und die erfindungsgemäßen Polyadditionsverbindungen und/oder deren Salze. Diese kann zur Herstellung von wässrigen und/oder lösungsmittelhaltigen Systeme eingesetzt werden.

Vorzugsweise weist die erfindungsgemäße Zusammensetzung als wässrige und/oder lösungsmittelhaltige Systeme eine Fließgrenze auf.

Bevorzugt beträgt die Fließgrenze der wässrigen und/oder lösungsmittelhaltigen Systeme, ermittelt nach DIN 1342-1 2003 11 und DIN Fachbericht 143, einen Wert von $\tau$ in PA = 0,1 - 400, bevorzugt $\tau$ in PA = 0,1 - 100, besonders bevorzugt $\tau$ in PA = 0,1 - 50.

Bevorzugt weisen die erfindungsgemäße Zusammensetzung als wässrige und/oder lösungsmittelhaltige Systeme keinen Bodensatz nach 24h Lagerung bei Raumtemperatur auf.

Bevorzugt weisen die erfindungsgemäße Zusammensetzung als wässrige und/oder lösungsmittelhaltige Systeme einen Anti-Ausschwimm Effekt auf.

Handelsübliche Lackformulierungen sind nur in Ausnahmefällen monopigmentiert, in der Regel wird es sich um Mischungen von zwei oder mehreren verschiedenen Pigmenten handeln. Auch in solchen Systemen sollten alle Pigmente gut benetzt und möglichst deflockuliert und gleichmäßig im gesamten Lackfilm verteilt sein.

Wenn diese Mischung aber gestört wird, weil die Pigmente sich entmischen, kommt es zu Farbtonveränderungen im Lack. Dieser Defekt wird als "Ausschwimmen" bezeichnet.

Eine der Ursachen für das Entmischen der Pigmente sind Strömungserscheinungen im trocknenden Lackfilm. Während der Trocknungsphase eines Lackfilms muss Lösemittel aus den unteren Lackschichten an die Oberfläche transportiert werden, beim Verdunsten erhöht sich die Dichte des zurückbleibenden Materials (beispielsweise Pigmente) und es sinkt wieder in die Tiefe.

Zusätzlich treten beim Verdunsten Abkühlungseffekte auf und die Oberflächenspannung verändert sich. All das führt zur Ausbildung von Wirbelströmungen, die sich in Form von mehr oder weniger gleichmäßigen sechseckigen Zellen (den sogenannten Benard-Zellen) anordnen. Im Zentrum der Zellen steigt das Lackmaterial nach oben, verteilt sich dann über die Oberfläche und strömt an den Zellgrenzen wieder nach unten. Diese Zellströmungen sind schon seit langem - nicht nur im Lack - bekannt und treten in jedem flüssigen Lackfilm (auch unpigmentiert) auf. In einem pigmentierten System nehmen jetzt auch die Pigmente an diesen Wirbelströmungen teil und solange die Beweglichkeit der verschiedenen Pigmente ähnlich ist, werden sie auch in ganz ähnlicher Weise in den Wirbeln transportiert und es kommt nicht zur Entmischung. Sind aber die Pigmentbeweglichkeiten deutlich unterschiedlich, so ist auch das Transportverhalten unterschiedlich und es kann zur Entmischung kommen.

Das Entmischen der Pigmente hängt eng mit der unterschiedlichen Pigmentbeweglichkeit zusammen. Die Pigmente nehmen an diesen Bewegungen teil und wenn sie sich in ihrer Beweglichkeit unterscheiden, kann es zur Entmischung und damit zum Ausschwimmen kommen.

Diese Unterschiede der Beweglichkeit lassen sich angleichen durch die Verwendung der erfindungsgemäßen Polyadditionsverbindungen und deren Salze.

Vorzugsweise kann die erfindungsgemäße Zusammensetzung zur Herstellung von Dispersionen, Mahlgütern, Farben, Lacken oder Drucktinten, Inkjet, Anreibeharze oder Pigmentkonzentrate verwendet werden.

Auch die Verwendung der erfindungsgemäße Polyadditionsverbindungen und deren Salze als Netz- oder Dispergiermittel, als Dispersionsstabilisatoren, als Anti-Absetzmittel, als Rheologieadditiv, als Beschichtungsmittel ist Gegenstand der Erfindung.

Ebenfalls Gegenstand der vorliegenden Erfindung ist eine Dispersion umfassend die erfindungsgemäße Polyadditionsverbindungen und deren Salze als Dispergiermittel, einen teilchenförmigen Feststoff und ein organisches

Medium und/oder um ein wässriges Medium. Der in der Dispersion vorliegende Feststoff kann irgendein anorganisches oder organisches festes Material sein, welches in dem organischen Medium bei der betreffenden Temperatur im Wesentlichen unlöslich ist und welches in einer feinverteilten Form darin stabilisiert werden soll. Beispiele geeigneter Feststoffe sind Pigmente für Lösungsmitteltinten, Pigmente; Streckmittel und Füllstoffe für Farben und Kunststoffmaterialien; Farbstoffe, insbesondere Dispersionsfarbstoffe; optische Aufhellungsmittel und textile Zusatzstoffe für Lösungsmittelfarbbäder, Tinten und andere Lösungsmittelanwendungssysteme; Feststoffe für Öl-basierende und Invertemulsionsbohrschlämme; Schmutz und feste Teilchen in Trockenreinigungsflüssigkeiten; teilchenförmige keramische Materialien; magnetische Materialien und magnetische Aufzeichnungsmedien und Biozide, Agrochemikalien und Pharmazeutika, die als Dispersionen in organischen Medien verwendet werden.

Ein bevorzugter Feststoff ist ein Pigment aus irgendeiner der anerkannten Klassen von Pigmenten, die beispielsweise in Third Edition of the Colour Index (1971) und nachfolgenden Neubearbeitungen und Ergänzungen dazu unter dem Kapitel mit der Überschrift "Pigmente" beschrieben werden. Beispiele anorganischer Pigmente sind Titandioxid, Zinkoxid, Preußisch-Blau, Cadmiumsulfid, Eisenoxide, Vermillon, Ultramarin und die Chrompigmente, einschließlich Chromaten, Molybdaten und gemischten Chromaten und Sulfaten von Blei, Zink, Barium, Calcium und Gemische und Modifikationen davon ,die als grünlich-gelbe bis rote Pigmente unter den Namen Primrose-Chrom, Zitrone-,mittleres, Orange-, Scharlachrot- und Rot-Chrom kommerziell erhältlich sind. Beispiele organischer Pigmente sind diejenigen aus der Reihe der Azo-, Diazo-, kondensierten Azo-, Thioindigo-, Indanthron-, Isoindanthron-, Anthanthron-, Anthrachinon-, Isodibenzanthron-, Triphendioxazin-, Chinacridon- und Phthalocyanin-Pigmente, insbesondere Kupferphthalocyanin und dessen am Kern halogenierte Derivate, sowie auch Lacke aus sauren, basischen und beizenden Farbstoffen. Kohlenstoffschwarz verhält sich, obwohl es strikt anorganisch ist, im Hinblick auf seine Dispergiereigenschaften eher wie ein organisches Pigment. Bevorzugte organische Pigmente sind Phthalocyanin-, insbesondere Kupferphthalocyanin-, Monoazo-, Disazo-, Indanthron-, Anthanthron-, Chinacridon- und Kohlenstoffschwarz-Pigmente.

Weitere bevorzugte Feststoffe sind Streckmittel und Füllstoffe, wie Talk, Kaolin, Siliciumdioxid, Baryt und Kreide; teilchenförmige keramische Materialien, wie Aluminiumoxid, Siliciumdioxid, Zirkoniumdioxid, Titandioxid, Siliciumnitrid, Bornitrid, Siliciumcarbid, Borcarbid, gemischte Silicium-Aluminium-Nitride und Metalltitanate, teilchenförmige magnetische Materialien, wie die magnetischen Oxide von Übergangsmetallen, insbesondere Eisen und Chrom, z.B. Gamma-$Fe_2O_3$, $Fe_3O_4$ und mit Kobalt dotierte Eisenoxide, Calciumoxid, Ferrite, insbesondere Bariumferrite und Metallteilchen, insbesondere metallisches Eisen, Nickel, Kobalt und Legierungen davon, und Agrochemikalien, wie die Fungizide Flutriafen, Carbendazim, Chlorthalonil und Mancozeb.

Das in den Dispersionen der Erfindung vorliegende wässrige oder organische Medium ist vorzugsweise ein polares organisches Medium oder ein im Wesentlichen nicht polarer aliphatischer oder aromatischer Kohlenwasserstoff oder halogenierter Kohlenwasserstoff. Mit dem Begriff "polar" in Bezug auf das organische Medium ist eine organische Flüssigkeit oder ein Harz gemeint, die bzw. das in der Lage ist, mäßige bis starke Bindungen zu bilden, wie es in dem Artikel mit dem Titel "A Three Dimensional Approach to Solubility" von Crowley et al. in Journal of Paint Technology, Band 38, 1966, auf Seite 269 beschrieben ist. Solche organischen Medien haben im Allgemeinen eine Wasserstoffbindungszahl von 5 oder mehr, wie es in dem oben genannten Artikel definiert ist.

Beispiele geeigneter polarer organischer Medien sind Amine, Ether, insbesondere niedere Alkylether, organische Säuren, Ester, Ketone, Glycole, Alkohole und Amide. Zahlreiche spezifische Beispiele solcher mäßig stark Wasserstoffbindender Flüssigkeiten sind in dem Buch mit dem Titel "Compatibility and Solubility" von Ibert Mellan (veröffentlicht 1968 von Noyes Development Corporation) in Tabelle 2.14 auf den Seiten 39 - 40 angegeben. Die in der Veröffentlichung genannten Flüssigkeiten fallen alle in den Bereich des Begriffs für ein polares organisches Medium, und sind somit Bestandteil der vorliegenden Offenbarung.

Bevorzugte polare organische Flüssigkeiten sind Dialkylketone, Alkylester von Alkancarbonsäuren und Alkanolen, insbesondere solche Flüssigkeiten, die bis zu und einschließlich einer Gesamtzahl von 6 Kohlenstoffatomen enthalten. Besonders bevorzugte organische Medien sind Dialkyl- und Cycloalkylketone, wie Aceton, Methylethylketon, Diethylketon, Diisopropylketon, Methylisobutylketon, Diisobutylketon, Methylisoamylketon, Methyl-n-amylketon und Cyclohexanon; Alkylester, wie Methylacetat, Ethylacetat, Isopropylacetat, Butylacetat, Ethylformiat, Methylpropionat, Methoxypropylacetat und Ethylbutyrat; Glycole und Glycolester und Ether, wie Ethylenglycol, 2-Ethoxyethanol, 3-Methoxypropylpropanol, 3-Ethoxypropylpropanol, 2-Butoxyethylacetat, 3-Methoxypropylacetat, 3-Ethoxypropylacetat und 2-Ethoxyethylacetat, Alkanole, wie Methanol, Ethanol, n-Propanol, Isopropanol, n-Butanol und Isobutanol und Dialkyl- und zyklische Ester, wie Diethylether und Tetrahydrofuran.

Die im Wesentlichen nicht polaren Medien, die entweder alleine oder im Gemisch mit den vorgenannten polaren Lösungsmitteln verwendet werden können, sind aliphatische oder aromatische Kohlenwasserstoffe, wie Toluol und Xylol, und halogenierte aliphatische und aromatische Kohlenwasserstoffe, wie Trichlorethylen, Perchlorethylen und Chlorbenzol. Beispiele für geeignete polare Harze als Medium für die Dispersionsform der vorliegenden Erfindung sind solche filmbildenden Harze, die für die Herstellung von Tinten, Farben und Spänen zur Verwendung in zahlreichen Anwendungen wie Farben und Tinten geeignet sind. Beispiele für solche Harze umfassen Polyamide, wie z. B. Versamid* der Fa. BASF SE oder Zelluloseether, wie Ethylzellulose und Ethylhydroxyethylzellulose. Beispiele von Farbharzen

umfassen kurzölige Alkyd/Melaminformaldehydharze, Polyester/Melaminformaldehydharze, wärmehärtende Acryl/Melaminformaldehydharze, langölige Alkydharze und mehrschichtige Harze wie Acryl und Harnstoff/Aldehydharze.

Die Dispersion kann, sofern gewünscht, andere Bestandteile enthalten, zum Beispiel Harze (sofern diese nicht bereits das organische Medium darstellen), Bindemittel, verflüssigende Mittel (wie die in GB-A-1508576 und GB-A-2108143 beschriebenen), Plastifizierungsmittel, Nivellierungsmittel und Konservierungsmittel.

Vorzugsweise werden die erfindungsgemäßen Polyadditionsverbindungen und/oder deren Salze in einer Menge von 0,1 bis 10,0 Gew.-%, besonders bevorzugt 0,3 bis 4,5 Gew.-%, und ganz besonders bevorzugt 0,5 bis 4,0 Gew.-%, bezogen auf das Gesamtgewicht der Dispersion eingesetzt.

Bevorzugt liegt die erfindungsgemäße Dispersion als Tinte oder Beschichtungsmittel, Inkjet, insbesondere als Druckfarbe oder Lack oder Bautenfarben, vor.

Weitere Einsatzgebiete sind vorstellbar, wie z. B. bei der Herstellung oder Verarbeitung von Lacken, Druckfarben, Bautenfarben, Papierstrich, Leder- und Textilfarben, Pasten, Pigmentkonzentraten, Inkjet, Keramikmaterialien oder kosmetischen Zubereitungen und zwar insbesondere dann, wenn diese Produkte partikuläre Feststoffe wie Pigmente und/oder Füllstoffe, enthalten.

Die erfindungsgemäßen Polyadditionsverbindungen und deren Salze können zur Herstellung von Feststoffkonzentraten, wie Pigmentkonzentraten, verwendet werden. Dazu werden sie in einem Trägermedium wie organischen Lösemitteln, Weichmachern und/oder Wasser vorgelegt, und die zu dispergierenden Feststoffe werden unter Rühren zugegeben. Zusätzlich können diese Konzentrate Bindemittel und/oder andere Hilfsstoffe enthalten. Mit den erfindungsgemäßen Polyadditionsverbindungen und deren Salze ist es aber insbesondere auch möglich, stabile bindemittelfreie Pigmentkonzentrate herzustellen, die über die Zeit keinen Bodensatz bilden. Ebenso ist es möglich, mit den erfindungsgemäßen Polyadditionsverbindungen und deren Salze fließfähige Feststoffkonzentrate aus Pigmentpresskuchen herzustellen. Hierbei werden dem Presskuchen, der noch organische Lösemittel, Weichmacher und/oder Wasser enthalten kann, die erfindungsgemäßen Polyadditionsverbindungen und deren Salze zugemischt und die so erhaltene Mischung dispergiert. Die auf verschiedenen Wegen hergestellten Feststoffkonzentrate können dann in unterschiedliche Substrate wie beispielsweise Alkydharze, Polyesterharze, Acrylatharze, Polyurethanharze oder Epoxidharze eingearbeitet werden. Partikuläre Feststoffe, insbesondere jedoch Pigmente und/oder Füllstoffe, können aber auch lösemittelfrei direkt in den Polymeren dispergiert werden und eignen sich dann besonders zur Pigmentierung von thermoplastischen und duroplastischen Kunststoffformulierungen.

Die Erfindung betrifft daher auch eine Partikelzubereitung enthaltend 5,0 bis 99,9 Gew.-% eines oder mehrerer partikulärer Feststoffe sowie 0,1 bis 95,0 Gew.% eines oder mehrerer erfindungsgemäßen Polyadditionsverbindungen und deren Salze bezogen auf das Gesamtgewicht der Partikelzubereitung. Bei den Partikelzubereitungen handelt es sich vorzugsweise um Pigmentzubereitungen oder Pigment-Füllstoff-Zubereitungen, auch als Pigmentpräparationen oder Pigment-Füllstoff-Präparationen bezeichnet. Die partikulären Feststoffe, insbesondere die Pigmente und/oder Füllstoffe liegen in den vorgenannten Zubereitungen beziehungsweise Präparationen üblicherweise in höherer Konzentration vor als in den späteren Anwendungen. Als Trägermaterial für die partikulären Feststoffe kann im einfachsten Fall das erfindungsgemäße erfindungsgemäßen Polyadditionsverbindungen und deren Salze dienen, so dass in einem solchen Fall die Präparationen zu 5,0 bis 99,9 Gew.% aus einem oder mehreren partikulären Feststoffen sowie 0,1 bis 95,0 Gew.% aus einem oder mehreren erfindungsgemäßen Polymeren besteht. Die Partikelzubereitungen können jedoch auch vom Netz- und Dispergiermittel verschiedene Bindemittel, einschließlich anderer Additive und/oder organische Lösemittel und/oder Wasser enthalten. Die Partikelzubereitungen können in fester Form, beispielsweise als Pulver, Chips oder Granulate oder flüssiger Form vorliegen. Bei flüssigen Pigmentpräparationen oder Pigment-Füllstoff-Präparationen spricht man in Abhängigkeit des Pigmentanteils oder Pigment- und Füllstoffanteils auch von Farbkonzentraten, Pigmentpasten, Volltonpasten, Nuancier- oder Abtönpasten oder von Pigmentteigen.

Die erfindungsgemäßen Partikelzubereitungen, insbesondere die Pigmentzubereitungen oder Pigment-Füllstoff-Zubereitungen werden vorzugsweise bei der Lack-, Druckfarben- und Kunststoffherstellung verwendet.

Diese Technologie der Pigmentkonzentrate lässt sich auf andere Stoffe erweitern, wie auf Mattierungsmittel, funktionelle Füllstoffe, Korrosionsschutzpigmente, biozide Wirkstoffe wie Kupferoxid, Zinkstaub und andere. Dies ermöglicht neue Formulierungskonzepte, deren gesamtes Potenzial noch nicht ausgeschöpft ist. Die Begriffe Pigmente und Pigmentkonzentrate beziehen sich somit auch auf nicht färbende Stoffe.

Die erfindungsgemäßen Polyadditionsverbindungen und deren Salze können vorteilhaft auch bei der Herstellung von Tinten für "Non-Impact"-Druckverfahren wie "Thermal-Inkjet" und dem "Bubblejet-Verfahren" verwendet werden. Diese Tinten können beispielsweise wässrige Tintenformulierungen, lösemittelbasierte Tintenformulierungen, lösemittelfreie oder lösemittelarme Tinten für UV-Applikationen als auch wachsartige Tinten sein.

Die erfindungsgemäßen Polyadditionsverbindungen und deren Salze können vorteilhaft auch bei der Herstellung von Farbfiltern für Flüssigkristallanzeigen, -Bildschirme, Farbauflösungsgeräte, Sensoren, Plasmabildschirme, Anzeigen auf Basis der SED (Surface conduction Electron emitter Display) und für MLCC (Multi Layer Ceramic Capacitors) verwendet werden. Hierbei kann der flüssige Farbfilterlack, der auch Color Resist genannt wird, durch verschiedenste Applikationsverfahren wie Spin Coating, Aufrakeln, Kombination beider Verfahren oder über "non impacf'-Druckverfahren

wie zum Beispiel Inkjet- Verfahren aufgetragen werden. Die MLCC-Technologie wird bei der Herstellung von Mikrochips und Leiterplatten verwendet.

Die erfindungsgemäßen Polyadditionsverbindungen und deren Salze können auch zur Herstellung kosmetischer Zubereitungen wie zum Beispiel Make-up, Puder, Lippenstifte, Haarfärbemittel, Cremes, Nagellacke und Sonnenschutzpräparate verwendet werden. Diese können in den üblichen Formen, wie beispielsweise als W/O- oder O/W-Emulsionen (Water-in-Oil oder Oil-in-Water- Emulsionen), Lösungen, Gele, Cremes, Lotionen oder Sprays, vorliegen.

Das erfindungsgemäße Dispergiermittel kann schließlich auch zur Herstellung eines pigmentierten Überzuges auf einem Substrat verwendet werden, wobei ein pigmentiertes Beschichtungsmittel auf das Substrat aufgebracht wird und wobei das auf das Substrat aufgebrachte pigmentierte Beschichtungsmittel eingebrannt oder anderweitig ausgehärtet bzw. vernetzt wird.

Eine mögliche Verwendung der erfindungsgemäßen Polyadditionsverbindungen und deren Salze besteht auch in der Herstellung dispergierbarer Pulverpartikel- und/oder faserpartikelförmiger Feststoffe, insbesondere von dispergierbaren Pigmenten oder Füllstoffen, insbesondere Kunststofffüllstoffen, wobei die Partikel mit dem erfindungsgemäßen Polymer beschichtet sind. Derartige Beschichtungen von organischen wie auch anorganischen Feststoffen werden in bekannter Weise ausgeführt. Hierbei kann das Lösungs- oder Emulsionsmittel entweder entfernt werden oder im Gemisch unter Bildung von Pasten verbleiben. Diese Pasten sind übliche Handelsprodukte und können zusätzlich Bindemittelanteile sowie weitere Hilfs- und Zusatzstoffe enthalten. Speziell bei Pigmenten kann die Beschichtung der Pigmentoberfläche während oder nach der Synthese der Pigmente erfolgen, z. B. durch Zusatz der Copolymere zur Pigmentsuspension oder während oder nach dem Pigmentfinish. Die auf diese Weise vorbehandelten Pigmente zeichnen sich durch leichtere Verarbeitbarkeit sowie durch verbessertes Viskositäts-, Flockulations- und Glanzverhalten und durch höhere Farbstärke gegenüber nicht behandelten Pigmenten aus.

Beispiele für im Rahmen der vorliegenden Erfindung geeignete anorganische Pigmente sind Oxid- und Oxidhydroxid- sowie komplexe anorganische Pigmente wie beispielsweise Titandioxidpigmente, Eisenoxidpigmente, Chromoxidpigmente, Bismutvanadatpigmente, komplexe anorganische Buntpigmente beispielsweise mit Rutil- oder Spinellgitter oder oxidische keramische Farbkörper, Sulfid- und Sulfidselenidpigmente wie beispielsweise Zinksulfidpigmente und Cadmiumpigmente, Bleichromatpigmente wie beispielsweise Chromgelbpigmente, Molybdatrotpigmente und Chromgrün- und Chromechtgrünpigmente Komplexsalzpigmente wie beispielsweise Cyanidpigmente (Eisenblau) Silikatpigmente wie beispielsweise Ultramarinpigmente; Effektpigmente wie beispielsweise plättchenförmige Aluminium-, Goldbronze- und Zinkpigmente, Perlglanzpigmente, Effektpigmente auf Eisenoxidbasis, Effektpigmente auf metallischer Basis, Color Variable Pigmente und cholesterische Effektpigmente, Korrosionsschutzpigmente wie beispielsweise Zinkstaub, Phosphatpigmente, Zinkoxid/Zinkweiß, Eisenglimmer und Korrosionsschutzpigmente auf Titandioxid- Basis; und Pigmentruße wie beispielsweise Furnaceruße, Gasruße und Flammruße.

Beispiele für im Rahmen der vorliegenden Erfindung geeignete organische Pigmente sind Azopigmente wie beispielsweise Monoazopigmente, Diazopigmente, Polyazopigmente und Metallkomplexpigmente; polyzyklische Pigmente wie beispielsweise Kupferphthalocyanine, Diketo-Pyrrolo-Pyrrole (DPP), Chinacridone, Isoindolinone, Isoindoline, Perylene und Perinone; Beispiele für im Rahmen der vorliegenden Erfindung geeignete Erscheinungsformen des Kohlenstoffs, soweit sie nicht bereits unter dem Begriff der Pigmente oder Füllstoffe aufgeführt sind, sind beispielsweise amorpher Kohlenstoff, Kohlenstoff- Fasern, Glaskohlenstoff, Graphen, Fullerene, Diamant, Lonsdaleit, Aktivkohle, Kohlenstoffnanoröhren, Carbon Nanobuds, Kohlenstoffnanoschaunn und Aerographit.

Nachstehend soll die Erfindung anhand von Ausführungsbeispielen näher erläutert werden.

**Messmethoden:**

Zur Bestimmung von Parametern oder Messwerten werden vorzugsweise die nachfolgend beschriebenen Methoden verwendet. Insbesondere wurden diese Methoden in den Beispielen des vorliegenden Schutzrechts verwendet.

**Epoxid-Equivalent**

Angelehnt an die DIN ISO 16945 wird das Epoxid-Equivalent bestimmt:
Unter dem Epoxid-Equivalentgewicht wird diejenige Menge Epoxidharz in g verstanden, die 16g epoxidisch gebundenen Sauerstoff (Epoxid-Sauerstoff) enthält. Die Epoxidgruppen in Epoxidharzen lassen sich durch Addition von HCl an den Epoxidring bestimmen. Der Überschuss an Salzsäure wird unter Berücksichtigung eines parallel angesetzten Blindwertes mit ethanolischer Kalilauge zurück titriert.

In die Erlenmeyerkolben wird die Probenmenge auf 0,1 mg genau eingewogen. Anschließend wird mit der Vollpipette 40 ml einer 0,1 mol/l HCl-Lösung in Dioxan zu pipettiert. Der Kolben wird mit einem passenden Schliffstopfen verschlossen. Es wird öfter geschwenkt, bis sich die Probe vollständig gelöst hat. Nach Zugabe von einigen Tropfen der Kresolrot-Indikatorlösung wird gegen 0,1 mol/l ethanolische Kalilauge titriert. Bei Zugabe des Indikators wird die

Lösung ziegelrot, kurz vor Erreichen des Endpunktes schlägt sie nach zitronengelb um. Der Endpunkt der Titration ist erreicht, wenn ein erneuter Farbumschlag nach blau-violett erfolgt.

Unter Berücksichtigung des Verbrauchs an 0,1 mol/l ethanolischer Kalilauge von Blindwert und Probe und der Einwaage wird der Gehalt an Epoxi-Sauerstoff wie folgt berechnet:

$$\% Epoxi - O = \frac{(V_{Blind} - V) * c * M}{10 * E}$$

In dieser Formel bedeuten:

| | |
|---|---|
| $V_{Blind}$ | Verbrauch an 0,1 mol/l ethanolischer Kalilauge in ml bei der Blindwert-Titration |
| V | Verbrauch an 0,1 mol/l ethanolischer Kalilauge in ml bei der Proben-Titration |
| C | Konzentration der verwendeten ethanolischen Kalilauge (0,1 mol/l) |
| M | Molare Masse von Sauerstoff (16 g/mol) |
| E | Probeneinwaage in g |

### 1. Herstellung von erfindungsgemäßen Polyadditionsverbindungen und deren Salzen

### 1.1 Umsetzung des Epoxidharzes mit dem Polyetheralkohol

In einem mit Rührer, Thermometer, Rückflusskühler und Stickstoffeinleitungsrohr versehenen Vierhalskolben wird der Polyether oder die Poyethermischung vorgelegt und unter Rühren und $N_2$ Gas auf 90°C aufgeheizt. Kalium Methanolat wird zu 1,0% Gewichtsanteil dem Polyether zugeben. Anschließend wird das Epoxidharz innerhalb von 30 Minuten zugetropft und weiter unter $N_2$ Gas auf 80°C abreagiert bis das Epoxid-Equivalent null ist. Das Reaktionsgemisch wird mit Milchsäure neutralisiert.

Eine leicht gelb gefärbte Flüssigkeit wird erhalten. Die Reaktion erwies einen 100% Umsatz basierend auf die Umsetzung der Epoxid-Gruppen.

### 1.2 a) Herstellung von erfindungsgemäßen Polyadditionsverbindungen und deren Salzen

In einem mit Rührer, Thermometer, Rückflusskühler und Stickstoffeinleitungsrohr versehenen Vierhalskolben wird das Produkt aus 1.1 (1,0 mol) vorgelegt und unter Rühren und $N_2$ Gas auf 80°C aufgeheizt. Anschließend wird Polyphosphorsäure (0,25 mol) innerhalb 30 Minuten zugetropft und weiter unter $N_2$ Gas bei 80° für 4 Stunden abreagiert.

Eine leicht gelb-orange gefärbte Flüssigkeit wurde erhalten.

### 1.2 b) Herstellung von erfindungsgemäßen Polyadditionsverbindungen und deren Salzen

In einem mit Rührer, Thermometer, Rückflusskühler und Stickstoffeinleitungsrohr versehenen Vierhalskolben wird das Produkt aus 1.1 (1,0 mol) vorgelegt und unter Rühren und $N_2$ Gas auf 80°C aufgeheizt. Anschließend wird Polyphosphorsäure (0,5 mol) innerhalb 30 Minuten zugetropft und weiter unter $N_2$ Gas bei 80° für 4 Stunden abreagiert.

Eine leicht gelb-orange gefärbte Flüssigkeit wurde erhalten.

Die Rezeptur ist aus Tabelle 1 zu entnehmen.

Die erfindungsgemäßen Polyadditionsverbindungen und deren Salze wurden zur Herstellung von Farbpasten eingesetzt, deren anwendungstechnische Eigenschaften überprüft wurden.

**Tabelle 1:**

| | Epoxid Harz | | Mol Polyether 1 | | Polyether 2 | Mol | Polyether 3 | Mol | Mol Polyphorsäure |
|---|---|---|---|---|---|---|---|---|---|
| **1 A** | Epon Resin 862 | 1,00 | Tego Alkanol L4 | 0,60 | Polyglykol M 500 | 0,60 | - | - | 0,00 |
| **1 B** | Epon Resin 862 | 1,00 | Tego Alkanol L4 | 0,60 | Polyglykol M 500 | 0,60 | - | - | 0,25 |
| **1 C** | Epon Resin 862 | 1,00 | Tego Alkanol L4 | 0,60 | Polyglykol M 500 | 0,60 | - | - | 0,50 |

(fortgesetzt)

| | Epoxid Harz | | Mol Polyether 1 | | Polyether 2 | Mol | Polyether 3 | Mol | Mol Polyphorsäure |
|---|---|---|---|---|---|---|---|---|---|
| **2 A** | Epon Resin 862 | 1,00 | Imbentin-C-91-040 | 0,96 | Polyglykol M 350 | 0,24 | - | - | 0,00 |
| **2 B** | Epon Resin 862 | 1,00 | Imbentin-C-91-040 | 0,96 | Polyglykol M 350 | 0,24 | - | - | 0,25 |
| **2 C** | Epon Resin 862 | 1,00 | Imbentin-C-91-040 | 0,96 | Polyglykol M 350 | 0,24 | - | - | 0,50 |
| **3 A** | Epon Resin 862 | 1,00 | Imbentin-C-91-040 | 0,72 | Polyglykol M 500 | 0,48 | - | - | 0,00 |
| **3 B** | Epon Resin 862 | 1,00 | Imbentin-C-91-040 | 0,72 | Polyglykol M 500 | 0,48 | - | - | 0,25 |
| **3 C** | Epon Resin 862 | 1,00 | Imbentin-C-91-040 | 0,72 | Polyglykol M 500 | 0,48 | - | - | 0,50 |
| **4 A** | Epon Resin 862 | 1,00 | Imbentin-C-91-040 | 0,84 | Polyglykol M 500 | 0,36 | - | - | 0,00 |
| **4 B** | Epon Resin 862 | 1,00 | Imbentin-C-91-040 | 0,84 | Polyglykol M 500 | 0,36 | - | - | 0,25 |
| **4 C** | Epon Resin 862 | 1,00 | Imbentin-C-91-040 | 0,84 | Polyglykol M 500 | 0,36 | - | - | 0,50 |
| **5 A** | Epon Resin 862 | 1,00 | Tego Alkanol S20 | 0,96 | Polyglykol M 500 | 0,24 | - | - | 0,00 |
| **5 B** | Epon Resin 862 | 1,00 | Tego Alkanol S20 | 0,96 | Polyglykol M 500 | 0,24 | - | - | 0,25 |
| **5 C** | Epon Resin 862 | 1,00 | Tego Alkanol S20 | 0,96 | Polyglykol M 500 | 0,24 | - | - | 0,50 |
| **6 A** | Epon Resin 862 | 1,00 | Imbentin-C-91-040 | 0,60 | Polyglykol M 500 | 0,42 | Polyglykol 600 | 0,18 | 0,00 |
| **6 B** | Epon Resin 862 | 1,00 | Imbentin-C-91-040 | 0,60 | Polyglykol M 500 | 0,42 | Polyglykol 600 | 0,18 | 0,25 |
| **6 C** | Epon Resin 862 | 1,00 | Imbentin-C-91-040 | 0,60 | Polyglykol M 500 | 0,42 | Polyglykol 600 | 0,18 | 0,50 |
| **7 A** | Epon Resin 862 | 1,00 | Imbentin-C-91-040 | 0,60 | Polyglykol M 500 | 0,60 | - | - | 0,00 |
| **7 B** | Epon Resin 862 | 1,00 | Imbentin-C-91-040 | 0,60 | Polyglykol M 500 | 0,60 | - | - | 0,25 |
| **7 C** | Epon Resin 862 | 1,00 | Imbentin-C-91-040 | 0,60 | Polyglykol M 500 | 0,60 | - | - | 0,50 |
| **8 A** | Epon Resin 862 | 1,00 | BP 2020 | 1,20 | - | - | - | - | 0,00 |
| **8 B** | Epon Resin 862 | 1,00 | BP 2020 | 1,20 | - | - | - | - | 0,25 |
| **8 C** | Epon Resin 862 | 1,00 | BP 2020 | 1,20 | - | - | - | - | 0,50 |
| **9 A** | DER 331 | 1,00 | BP 1040 | 1,2 | | | - | - | 0,00 |

(fortgesetzt)

| | Epoxid Harz | | Mol Polyether 1 | | Polyether 2 | Mol | Polyether 3 | Mol | Mol Polyphorsäure |
|---|---|---|---|---|---|---|---|---|---|
| **9 B** | DER 331 | 1,00 | BP 1040 | 1,2 | | | - | - | 0,25 |
| **9 C** | DER 331 | 1,00 | BP 1040 | 1,2 | | | - | - | 0,50 |
| **10A** | Ipox ER 15 | 1,00 | BP 1040 | 1,2 | | | - | - | 0,00 |
| **10B** | Ipox ER 15 | 1,00 | BP 1040 | 1,2 | | | - | - | 0,25 |
| **10 C** | Ipox ER 15 | 1,00 | BP 1040 | 1,2 | | | - | - | 0,50 |

**Verwendete Materialien:**

**Tabelle 2:**

| Produktname | Chemische Beschreibung | Firma |
|---|---|---|
| Epon Resin 862 | Harz hergestellt aus Bisphenol F und Epichlorhydrin | Hexion |
| Tego Alkanol L4 | Fettalkohol C12-C14 Ethoxylat | Evonik Resource Efficiency GmbH |
| Polyglykol M 500 | Methylierter Polyglykol mit einem Molekulargewicht von 500 | BASF |
| Polyglykol M 350 | Methylierter Polyglykol mit einem Molekulargewicht von 350 | BASF |
| Imbentin-C-91-080 | Oxoalkohol C9-11 mit 8 Mol EO | KOLB |
| Imbentin-C-91-040 | Oxoalkohol C9-11 mit 4 Mol EO | KOLB |
| Tego Alkanol S20 | Fettalkohol C18 Ethoxylat | Evonik Resource Efficiency GmbH |
| Polyglykol 600 | Polyglykol mit einem Molekulargewicht von 600 | BASF |
| Polyglykol B 2020 | Butylierter Polyglykol mit einem Molekulargewicht 2000 mit 20% Propylenoxid und 80 % Ethylenoxid | Evonik Resource Efficiency GmbH |
| DER 331 | Harz hergestellt aus Bisphenol A und Epichlorhydrin | Dow |
| Polyglykol B 1040 | Butylierter Polyglykol mit einem Molekulargewicht 2000 mit 40% Propylenoxid und 60 % Ethylenoxid | Evonik Resource Efficiency GmbH |
| Ipox ER 15 | Harz hergestellt aus Bisphenol A und Epichlorhydrin, hydriert | Ipox Chemicals |

**2. Methode für anwendungstechnisch Tests**

**Rub-out Test:**

Für den "rub out Test" wurden die Farbpasten mit einem 150 μm drowdown bar von Leneta auf einer Platte appliziert. Nach 5 Minuten Trockenzeit wurde der ‚rub-out Test' durchgeführt, der darin besteht, den aufgezogenen Lack anzureiben. Die Farbwerte werden entsprechend bestimmt vor und nach dem Anreiben und der ΔE (Delta E) bzw. Farbdifferenzen berechnet, der ein Maß für den Abstand zweier Farben verwendet wird und entsprechend eine Aussage bezüglich der Pigmentstabilisierung beim Durchführen vom "rub out Test" ermöglicht. Bei der Angabe von Farbdifferenzen bezeichnet der Wert 1 oder kleiner 1 einen Abstand, den das menschliche Auge nicht mehr wahrnimmt.

## Farbstärke

Die kolorimetrischen Werte wurden mit einem Spektrometer Model SP 62 von X-Rite bestimmt. Die Farbstärke F wurde anhand der folgenden Messung bestimmt:

$$F = \frac{(100 - Y)^2}{2\,Y}$$

Y = ist das Reflexionsvermögen der Wellenlänge der maximalen Absorption

Die Farbstärke gibt eine Aussage bezüglich der Farbintensität, die je nach Pigment aber auch je nach Dispergiermittel und Vermahlungsprozess variieren kann. Je höher die Farbstärke ist, umso besser ist das Dispergiermittel.

## Bodensatz

Die Farbpasten werden nach 24h Lagerung bei Raumtemperatur visuell begutachtet, ob ein Bodensatz vorliegt oder nicht.

## Fließgrenze

Gemäß der DIN 1342-1 2003 11 und DIN Fachbericht Nr. 143 wurde die Fließgrenze bestimmt und mit der Tangentenschnittpunkt-Methode die Fließgrenzenwerte ermittelt.

## 3. Anwendungstechnische Beurteilung

### 3.1 Farbpasten für wässrige und lösungsmittelhaltige Systeme

Für die anwendungstechnische Beurteilung wurden zunächst Farbpasten gemäß der Formulierungen aus den jeweiligen Tabellen 4 - 6 hergestellt. Die Vergleichsbeispiele (VG) wurden mit handelsüblichen Dispergiermitteln hergestellt.

Für die anwendungstechnische Prüfung wurden die jeweiligen Farbpasten in wässrige oder lösungsmittelhaltige Systeme überführt.

Die Fließgrenze und Bodensatz werden direkt aus der Farbpaste bestimmt.

#### 3.1.1 Herstellung des wässrigen Testsystems:

0,73 g der Farbpaste (VG1 und 1B gelb) und 19,27g eines Lacks der Marke ContiPur Satin auf Basis von Polyurethan von der Firma Kluthe wurden in einer 50 ml Kosmetikdosen eingewogen und mit Hilfe des Speed Mixers DAC 150 FVZ (Firma Hauschild) für 1 min bei 2.000 U/min homogenisiert.

#### 3.1.2 Herstellung des lösemittelhaltigen Testsystems:

0,73 g der Farbpaste (VG1 und 1B gelb) und 19,27g eines Lacks der Marke Impredur Hochglanzlack 840, aromatenfrei auf Alkydharz-Basis von der Firma Brillux wurden in einer 50 ml Kosmetikdosen eingewogen und mit Hilfe des Speed Mixers DAC 150 FVZ (Firma Hauschild) für 1 min bei 2.000 U/min homogenisiert.

**Tabelle 3: Verwendete Materialien**

| Produkt | Firma |
|---|---|
| TEGO® Dispers 653 | Evonik Resource Efficiency GmbH |
| TEGO® Dispers 652 | Evonik Resource Efficiency GmbH |
| TEGO® Foamex 810 | Evonik Resource Efficiency GmbH |
| TEGO® Foamex 830 | Evonik Resource Efficiency GmbH |
| TEGO® Foamex 8050 | Evonik Resource Efficiency GmbH |

(fortgesetzt)

| Produkt | Firma |
|---|---|
| PARMETOL® K 40 | Schülke & Mayr GmbH |
| BAYFERROX® 915 | LANXESS GmbH |
| HOSTAPERM® Rosa E | Clariant International Ltd |
| COLOR BLACK FW 200 | Orion Engineered Carbons GmbH |

**Tabelle 4: Pigment Bayferrox 915**

| Rezeptur Farbpaste | Festkörper (FK) [%] | VG1 (g) | 1B gelb (g) |
|---|---|---|---|
| demin. Wasser | | 26,2 | 23,6 |
| TEGO® Dispers 653 | 35 | 15,7 | - |
| 1B | 30 | - | 18,3 |
| TEGO® Dispers 652 | 100 | 2,0 | 2,0 |
| TEGO® Foamex 810 | | 1,0 | 1,0 |
| PARMETOL® K 40 | | 0,1 | 0,1 |
| BAYFERROX® 915 | | 55,0 | 55,0 |
| Summe | | 100,0 | 100,0 |
| Additiv fest auf Pigment [%] | | 10 | 10 |
| **Anwendungstechnische Ergebnisse:** | | | |
| **Wässrig basiertes Testsystem** | | | |
| F | | 7,83 | 8,08 |
| delta E | | 0,48 | 0,62 |
| delta *a | | -0,03 | -0,07 |
| delta *b | | -0,39 | -0,59 |
| **Lösemittelhaltiges Testsystem** | | | |
| F | | 5,58 | 5,05 |
| delta E | | 0,16 | 0,86 |
| delta *a | | 0,10 | -0,14 |
| delta *b | | -0,12 | 0,79 |
| **Rheologie** | | | |
| Fließgrenze ($\tau$ in PA) | | ~ 0,3 | ~ 12,6 |
| Bodensatz | | ja | nein |

Zwar konnte in VG1 eine Fließgrenze beobachtet werden, jedoch ist ein Absetzen der Pigmente festzustellen. Die erfindungsgemäße Farbpaste 1B gelb weist annähernd die gleichen Farbwerte auf wie VG1, jedoch ist kein Absetzen der Pigmente festzustellen.

"Additiv fest auf Pigment" ist eine dem Fachmann bekannte Größe, hierbei bedeutet "Additiv" = TEGO® Dispers 653 oder die erfindungsgemäßen Polyadditionsverbindungen und deren Salze.

**Tabelle 5: Pigment Hostaperm Rosa E**

| Rezeptur Farbpaste | FK [%] | VG2 (g) | 1B rosa (g) |
|---|---|---|---|
| demin. Wasser | | 59,6 | 57,3 |

(fortgesetzt)

| Rezeptur Farbpaste | FK [%] | VG2 (g) | 1B rosa (g) |
|---|---|---|---|
| TEGO® Dispers 653 | 35 | 14,3 | - |
| 1B | 30 | - | 16,6 |
| TEGO® Foamex 8050 | | 1,0 | 1,0 |
| PARMETOL® K 40 | | 0,1 | 0,1 |
| HOSTAPERM® Rosa E | | 25,0 | 25,0 |
| Summe | | 100,0 | 100,0 |
| Additiv fest auf Pigment [%] | | 20 | 20 |
| **Anwendungstechnische Ergebnisse:** | | | |
| **Wässrig basiertes Testsystem** | | | |
| F | | 34,64 | 34,07 |
| delta E | | 0,79 | 0,48 |
| delta *a | | -0,62 | 0,11 |
| delta *b | | -0,05 | -0,25 |
| **Lösemittelhaltiaes Testsystem** | | | |
| F | | 15,78 | 14,80 |
| delta E | | 12,44 | 12,42 |
| delta *a | | 10,12 | 10,75 |
| delta *b | | -5,47 | -5,22 |
| **Rheologie** | | | |
| Fließgrenze (τ in PA) | | keine | ~ 38 |
| Bodensatz | | ja | nein |

3.1.3 Herstellung des wässrigen Testsystems:

0,64 g der Farbpaste (VG2 und 1B rosa) und 19,36 g eines Lacks der Marke ContiPur Satin auf Basis von Polyurethan von der Firma Kluthe wurden in einer 50 ml Kosmetikdosen eingewogen und mit Hilfe des Speed Mixers DAC 150 FVZ (Firma Hauschild) für 1 min bei 2.000 U/min homogenisiert.

3.1.4 Herstellung des lösemittelhaltigen Testsystems:

0,64 g der Farbpaste (VG1 und 1B rosa) und 19,36 g eines Lacks der Marke Impredur Hochglanzlack 840, aromatenfrei auf Alkydharz-Basis von der Firma Brillux wurden in einer 50 ml Kosmetikdosen eingewogen und mit Hilfe des Speed Mixers DAC 150 FVZ (Firma Hauschild) für 1 min bei 2.000 U/min homogenisiert.

**Tabelle 6: Pigment Color Black FW 200**

| Color Black FW 200 | FK [%] | VG3 (g) | 1B schwarz (g) |
|---|---|---|---|
| demin. Wasser | | 38,9 | 32,2 |
| TEGO® Dispers 653 | 35 | 40,0 | - |
| 1B | 30 | - | 46,7 |
| TEGO® Foamex 830 | | 1,0 | 1,0 |
| PARMETOL® K 40 | | 0,1 | 0,1 |
| COLOR BLACK FW 200 | | 20,0 | 20,0 |

(fortgesetzt)

| Color Black FW 200 | FK [%] | VG3 (g) | 1B schwarz (g) |
|---|---|---|---|
| Summe | | 100,0 | 100,0 |
| Additiv fest auf Pigment [%] | | 70 | 70 |
| **Anwendungstechnische Ergebnisse:** | | | |
| **Wässrig basiertes Testsystem** | | | |
| F | | 111,70 | 109,20 |
| delta E | | 0,52 | 0,66 |
| delta *a | | -0,03 | 0,04 |
| delta *b | | -0,20 | 0,13 |
| **Lösemittelhaltiges Testsystem** | | | |
| F | | 77,34 | 73,71 |
| delta E | | 0,68 | 0,91 |
| delta *a | | 0,04 | 0,54 |
| delta *b | | 0,04 | 0,34 |
| **Rheologie** | | | |
| Fließgrenze ($\tau$ in PA) | | keine | ~ 168 |
| Bodensatz | | ja | nein |

3.1.5 Herstellung des wässrigen Testsystems:

0,80 g der Farbpaste (VG2 und 1B rosa) und 19,2 g eines Lacks der Marke ContiPur Satin auf Basis von Polyurethan von der Firma Kluthe wurden in einer 50 ml Kosmetikdosen eingewogen und mit Hilfe des Speed Mixers DAC 150 FVZ (Firma Hauschild) für 1 min bei 2.000 U/min homogenisiert.

3.1.6 Herstellung des lösemittelhaltigen Testsystems:

0,80 g der Farbpaste (VG1 und 1B rosa) und 19,2 g eines Lacks der Marke Impredur Hochglanzlack 840, aromatenfrei auf Alkydharz-Basis von der Firma Brillux wurden in einer 50 ml Kosmetikdosen eingewogen und mit Hilfe des Speed Mixers DAC 150 FVZ (Firma Hauschild) für 1 min bei 2.000 U/min homogenisiert.

Es ist festzustellen, dass die VG2 und VG3 keine Fleißgrenze und zudem ein Bodensatz aufweisen. Die erfindungsgemäßen Farbpasten mit den jeweiligen Pigmenten weisen gute Farbwerte und weisen keinen Bodensatz auf. Eine Fließgrenze konnte bestimmt werden.

**3.2 Farbpasten für lösungsmittelhaltige Systeme**

Für die anwendungstechnische Beurteilung wurden zunächst Farbpasten gemäß der Formulierungen aus den jeweiligen Tabellen 8 - 9 hergestellt. Die Vergleichsbeispiele (VG) wurden mit handelsüblichen Dispergiermitteln hergestellt.

Für die anwendungstechnische Prüfung wurden die jeweiligen Farbpasten in lösungsmittelhaltigen Systeme überführt.

3.2.1 Herstellung des lösemittelhaltigen Testsystems für Pigment BAYFERROX® 915:

0,73 g der Farbpaste mit dem Pigment BAYFERROX® 915 und 19,27g eines Lacks der Marke Impredur Hochglanzlack 840, aromatenfrei auf Alkydharz-Basis von der Firma Brillux wurden in einer 50 ml Kosmetikdosen eingewogen und mit Hilfe des Speed Mixers DAC 150 FVZ (Firma Hauschild) für 1 min bei 2.000 U/min homogenisiert.

3.2.2 Herstellung des lösemittelhaltigen Testsystems für Pigment BAYFERROX® 140M:

0,62 g der Farbpaste mit dem Pigment BAYFERROX® 915 und 19,38 g eines Lacks der Marke Impredur Hochglanzlack 840, aromatenfrei auf Alkydharz-Basis von der Firma Brillux wurden in einer 50 ml Kosmetikdosen eingewogen und mit Hilfe des Speed Mixers DAC 150 FVZ (Firma Hauschild) für 1 min bei 2.000 U/min homogenisiert.

**Tabelle 7: Verwendete Materialen:**

| Produkt | Firma |
|---|---|
| TEGO® VariPlus LK | Evonik Resource Efficiency GmbH |
| TEGO® Dispers 676 | Evonik Resource Efficiency GmbH |
| BAYFERROX® 140 M | LANXESS GmbH |
| BAYFERROX® 915 | LANXESS GmbH |

**Tabelle 8: Pigment BAYFERROX® 140 M**

| Farbpaste | FK [%] | VG4 (g) | 5B rot(g) | 5C rot(g) |
|---|---|---|---|---|
| TEGO® VariPlus LK | | 12,3 | 12,3 | 12,3 |
| TEGO® Dispers 676 | 85 | 4,6 | - | - |
| 5B | 100 | - | 3,9 | - |
| 5C | 100 | - | - | 3,9 |
| Methoxypropylacetat | | 18,2 | 18,9 | 18,9 |
| BAYFERROX® 140 M | | 65,0 | 65,0 | 65,0 |
| Summe | | 100,0 | 100,0 | 100,0 |
| Additiv fest auf Pigment [%] | | 6 | 6 | 6 |
| Harz fest auf Pigment [%] | | 17,5 | 17,5 | 17,5 |
| **Anwendungstechnische Ergebnisse** | | | | |
| F | | 34,61 | 35,41 | 34,70 |
| delta E | | 0,24 | 0,13 | 0,13 |
| delta *a | | 0,02 | -0,10 | -0,10 |
| delta *b | | 0,24 | 0,08 | 0,03 |
| **Rheologie** | | | | |
| Fließgrenze (τ in PA) | | keine | ~ 20,9 | ~ 10,2 |
| Bodensatz | | ja | nein | nein |

**Tabelle 9: Pigment Bayferrox 915**

| Farbpaste | FK [%] | VG5 (g) | 5B gelb (g) | 5C gelb (g) |
|---|---|---|---|---|
| TEGO® VariPlus LK | | 11,9 | 11,9 | 11,9 |
| TEGO® Dispers 676 | 85 | 4,6 | - | - |
| 5B | 100 | - | 3,9 | - |
| 5C | 100 | - | - | 3,9 |
| Methoxypropylacetat | | 28,6 | 29,3 | 29,3 |
| BAYFERROX® 915 | | 55,0 | 55,0 | 55,0 |

(fortgesetzt)

| Farbpaste | FK [%] | VG5 (g) | 5B gelb (g) | 5C gelb (g) |
|---|---|---|---|---|
| Summe | | 100,0 | 100,0 | 100,0 |
| Additiv fest auf Pigment [%] | | 7 | 7 | 7 |
| Harz fest auf Pigment [%] | | 20 | 20 | 20 |
| **Anwendunastechnische Ergebnisse** | | | | |
| F | | 6,75 | 6,07 | 6,65 |
| delta E | | 0,59 | 0,33 | 0,58 |
| delta *a | | 0,39 | 0,17 | 0,34 |
| delta *b | | 0,43 | 0,17 | 0,17 |
| **Rheologie** | | | | |
| Fließgrenze ($\tau$ in PA) | | keine | ~ 10,2 | ~ 15,6 |
| Bodensatz | | ja | nein | nein |

Auch bei diesen Farbpasten konnte festgestellt werden, dass die erfindungsgemäßen Farbpasten 5B rot, 5B gelb und 5C rot, 5C gelb gute Farbwerte aufweisen mit Fließgrenzen und kein Bodensatz.

### 3.3 Farbpasten für wässrige Systeme

Für die Bestimmung der Fließgrenze und Bodensatz wurden Farbpasten gemäß der Formulierungen aus den jeweiligen Tabellen 11 - 16 hergestellt. Die Vergleichsbeispiele (VG) wurden mit handelsüblichen Dispergiermitteln hergestellt.

**Tabelle 10: verwendete Materialien**

| Produkt | Firma |
|---|---|
| TEGO® Dispers 653 | Evonik Resource Efficiency GmbH |
| TEGO® Foamex 810 | Evonik Resource Efficiency GmbH |
| PARMETOL® K 40 | Schülke & Mayr GmbH |
| BAYFERROX® 318 M | LANXESS GmbH |
| BAYFERROX® 140 M | LANXESS GmbH |
| BAYFERROX® 3920 | LANXESS GmbH |
| KRONOS® 2190 | KRONOS TITAN GmbH |
| KRONOS® 2310 | KRONOS TITAN GmbH |
| Tronox 902+ | Tronox Pigments BV |
| SICOPAL® L 1110 | BASF SE |

**Tabelle 11: Pigment BAYFERROX® 318 M**

| Farbpaste | VG6 (g) | 2B schwarz (g) | 4C schwarz (g) | 3C schwarz (g) |
|---|---|---|---|---|
| demin. Wasser | 20,9 | 18,7 | 18,7 | 18,7 |
| TEGO® Dispers 653 | 13 | 0 | 0 | 0 |
| 2B | 0 | 15,2 | 0 | 0 |
| 4C | 0 | 0 | 15,2 | 0 |

(fortgesetzt)

| Farbpaste | VG6 (g) | 2B schwarz (g) | 4C schwarz (g) | 3C schwarz (g) |
|---|---|---|---|---|
| 3C | 0 | 0 | 0 | 15,2 |
| TEGO® Foamex 810 | 1 | 1 | 1 | 1 |
| BAYFERROX® 318 M | 65 | 65 | 65 | 65 |
| PARMETOL® K 40 | 0,1 | 0,1 | 0,1 | 0,1 |
| Summe | 100,0 | 100,0 | 100,0 | 100,0 |
| Additiv fest auf Pigment | 7,0 | 7,0 | 7,0 | 7,0 |
| **Rheologie** | | | | |
| Fließgrenze ($\tau$ in PA) | ~ 0,5 | ~ 30 | ~ 32 | -5 |
| Bodensatz | ja | nein | nein | nein |

**Tabelle 12: Pigment BAYFERROX® 140 M**

| Farbpaste | VG7 (g) | 2B rot (g) | 4C rot (g) | 3C rot (g) |
|---|---|---|---|---|
| demin. Wasser | 21,8 | 18,9 | 18,9 | 18,9 |
| TEGO® Dispers 653 | 17,1 | 0 | 0 | 0 |
| 2B | 0 | 20 | 0 | 0 |
| 4C | 0 | 0 | 20 | 0 |
| 3 C | 0 | 0 | 0 | 20 |
| TEGO® Foamex 810 | 1 | 1 | 1 | 1 |
| BAYFERROX® 140 M | 60 | 60 | 60 | 60 |
| PARMETOL® K 40 | 0,1 | 0,1 | 0,1 | 0,1 |
| Summe | 100,0 | 100,0 | 100,0 | 100,0 |
| Additiv fest auf Pigment | 10,0 | 10,0 | 10,0 | 10,0 |
| **Rheologie** | | | | |
| Fließgrenze ($\tau$ in PA) | -2 | - 10,1 | - 10,1 | - 10,2 |
| Bodensatz | ja | nein | nein | nein |

**Tabelle 12: Pigment BAYFERROX® 3920**

| Farbpaste | VG8 (g) | 2B orange (g) | 4C orange (g) | 3C orange (g) |
|---|---|---|---|---|
| demin. Wasser | 28,2 | 25,6 | 25,6 | 25,6 |
| TEGO® Dispers 653 | 15,7 | 0 | 0 | 0 |
| 2B | 0 | 18,3 | 0 | 0 |
| 4C | 0 | 0 | 18,3 | 0 |
| 3C | 0 | 0 | 0 | 18,3 |
| TEGO® Foamex 810 | 1 | 1 | 1 | 1 |
| BAYFERROX® 3920 | 55 | 55 | 55 | 55 |
| PARMETOL® K 40 | 0,1 | 0,1 | 0,1 | 0,1 |
| Summe | 100,0 | 100,0 | 100,0 | 100,0 |

(fortgesetzt)

| Farbpaste | VG8 (g) | 2B orange (g) | 4C orange (g) | 3C orange (g) |
|---|---|---|---|---|
| Additiv fest auf Pigment | 10,0 | 10,0 | 10,0 | 10,0 |
| **Rheologie** | | | | |
| Fließgrenze ($\tau$ in PA) | ~ 0,3 | ~ 10,4 | ~ 13,7 | ~ 15,6 |
| Bodensatz | ja | nein | nein | nein |

**Tabelle 13: Pigment KRONOS® 2190**

| Farbpaste | VG9 (g) | 2B Kronos 2190 (g) | 4C Kronos 2190 (g) | 3C Kronos 2190 (g) |
|---|---|---|---|---|
| demin. Wasser | 12,9 | 10,2 | 10,2 | 10,2 |
| TEGO® Dispers 653 | 16 | 0 | 0 | 0 |
| 2B | 0 | 18,7 | 0 | 0 |
| 4C | 0 | 0 | 18,7 | 0 |
| 3C | 0 | 0 | 0 | 18,7 |
| TEGO® Foamex 810 | 1 | 1 | 1 | 1 |
| KRONOS® 2190 | 70 | 70 | 70 | 70 |
| PARMETOL® K 40 | 0,1 | 0,1 | 0,1 | 0,1 |
| Summe | 100,0 | 100,0 | 100,0 | 100,0 |
| Additiv fest auf Pigment | 8,0 | 8,0 | 8,0 | 8,0 |
| **Rheologie** | | | | |
| Fließgrenze ($\tau$ in PA) | ~ 2 | ~ 12 | ~ 11 | ~ 10 |
| Bodensatz | ja | nein | nein | nein |

**Tabelle 14: Pigment KRONOS®2310**

| Farbpaste | VG10 (g) | 2B Kronos2310 (g) | 4C Kronos2310 (g) | 3C Kronos2310 (g) |
|---|---|---|---|---|
| demin. Wasser | 12,9 | 10,2 | 10,2 | 10,2 |
| TEGO® Dispers 653 | 16 | 0 | 0 | 0 |
| 2B | 0 | 18,7 | 0 | 0 |
| 4C | 0 | 0 | 18,7 | 0 |
| 3C | 0 | 0 | 0 | 18,7 |
| TEGO® Foamex 810 | 1 | 1 | 1 | 1 |
| KRONOS® 2310 | 70 | 70 | 70 | 70 |
| PARMETOL® K 40 | 0,1 | 0,1 | 0,1 | 0,1 |
| Summe | 100,0 | 100,0 | 100,0 | 100,0 |
| Additiv fest auf Pigment | 7,0 | 7,0 | 7,0 | 7,0 |
| **Rheologie** | | | | |
| Fließgrenze ($\tau$ in PA) | ~ 2 | ~ 10,2 | - 10,3 | ~ 10,3 |
| Bodensatz | ja | nein | nein | nein |

**Tabelle 15: Pigment Tronox 902**

| Farbpaste | VG11 (g) | 2B Tronox 902 (g) | 4C Tronox 902 (g) | 3C Tronox 902 (g) |
|---|---|---|---|---|
| demin. Wasser | 12,9 | 10,2 | 10,2 | 10,2 |
| TEGO® Dispers 653 | 16 | 0 | 0 | 0 |
| 2B | 0 | 18,7 | 0 | 0 |
| 4C | 0 | 0 | 18,7 | 0 |
| 3C | 0 | 0 | 0 | 18,7 |
| TEGO® Foamex 810 | 1 | 1 | 1 | 1 |
| Tronox 902+ | 70 | 70 | 70 | 70 |
| PARMETOL® K 40 | 0,1 | 0,1 | 0,1 | 0,1 |
| Summe | 100,0 | 100,0 | 100,0 | 100,0 |
| Additiv fest auf Pigment | 7,0 | 7,0 | 7,0 | 7,0 |
| **Rheologie** | | | | |
| Fließgrenze ($\tau$ in PA) | ~ 2 | ~ 14 | ~ 10,3 | ~ 10,3 |
| Bodensatz | ja | nein | nein | nein |

**Tabelle 16: Pigment SICOPAL® L 1110**

| Farbpaste | VG12 (g) | 2B gelb (g) | 4C gelb (g) | 3C gelb (g) |
|---|---|---|---|---|
| demin. Wasser | 20,9 | 18,9 | 18,9 | 18,9 |
| TEGO® Dispers 653 | 18 | 0 | 0 | 0 |
| 2B | 0 | 20 | 0 | 0 |
| 4C | 0 | 0 | 20 | 0 |
| 3C | 0 | 0 | 0 | 20 |
| TEGO® Foamex 810 | 1 | 1 | 1 | 1 |
| SICOPAL® L 1110 | 60 | 60 | 60 | 60 |
| PARMETOL® K 40 | 0,1 | 0,1 | 0,1 | 0,1 |
| Summe | 100,0 | 100,0 | 100,0 | 100,0 |
| Additiv fest auf Pigment | 10,0 | 10,0 | 10,0 | 10,0 |
| **Rheologie** | | | | |
| Fließgrenze ($\tau$ in PA) | ~ 2 | ~ 15,0 | ~ 20,0 | ~ 182,8 |
| Bodensatz | ja | nein | nein | nein |

Es konnte gezeigt werden, dass die erfindungsgemäße Polyadditionsverbindungen und deren Salze für die Herstellung von Farbpasten mit verschiedenen Pigmenten geeignet sind, wobei die Farbpasten kein Absetzen der Pigmente zeigen und zudem eine Fließgrenze aufweisen.

**3.4 Anti-Ausschwimm Effekt**

Zur Beurteilung des Anti-Ausschwimm Effekts wurden zunächst eine Farbpaste und eine Weißpaste hergestellt. Danach werden beide Pasten in einer Tinting-Formulierung gegeben und analysiert.

Die Rezeptur der Pasten ist aus Tabellen 18 - 20 zu entnehmen.

**Tabelle 17: Verwendete Materialien**

| Produkt | Firma |
|---|---|
| TEGO® Dispers 653 | Evonik Resource Efficiency GmbH |
| TEGO® Foamex 810 | Evonik Resource Efficiency GmbH |
| PARMETOL® K 40 | Schülke & Mayr GmbH |
| HOSTAPERM® Rosa E | Lanxess GmbH |
| KRONOS® 2310 | KRONOS TITAN GmbH |
| NeoCryl® XK-92 | DSM |
| Texanol | EASTMAN |

**Tabelle 18: Rezeptur Farbpaste 11 mit Pigment HOSTAPERM® Rosa E**

| Farbpaste 11 | FK [%] | VG2 (g) | 1B-rosa Anti (g) |
|---|---|---|---|
| Wasser | | 59,6 | 57,2 |
| TEGO® Dispers 653 | 35 | 14,3 | - |
| 1B | 30 | - | 16,7 |
| TEGO® Foamex 810 | | 1,0 | 1,0 |
| Parmetol K 40 | | 0,1 | 0,1 |
| Hostaperm Rosa E | | 25,0 | 25,0 |
| Summe | | 100,0 | 100,0 |
| Additiv fest auf Pigment [%] | | 20 | 20 |

**Tabelle 19: Rezeptur Weißpaste 11**

| Weißpaste 11 | FK [%] | VG13 (g) | 1B weiß Anti (g) |
|---|---|---|---|
| Wasser | | 34,4 | 37,5 |
| TEGO® Dispers 653 | 35 | 5,1 | - |
| 1B | 30 | - | 2,0 |
| TEGO® Foamex 810 | | 0,5 | 0,5 |
| KRONOS® 2310 | | 60,0 | 60,0 |
| Summe | | 100,0 | 100,0 |
| Additiv fest auf Pigment | | 3* | 1* |
| *optimaler Additivgehalt | | | |

**Tabelle 20: Rezeptur des Tintings**

| Rohstoffe | Menge (g) |
|---|---|
| NeoCryl® XK-92 | 97 |
| Texanol | 3 |

### 3.4.1 Farbwert und Rub-Out

Für die anwendungstechnische Prüfung wurde 10 g des Tinting mit 5 g der Weißpaste 11 mit Hilfe des Speed Mixers DAC 150 FVZ (Firma Hauschild) für 1 min bei 2.000 U/min homogenisiert. Anschließend wird 1 g der Farbpaste 11 dazu gewogen und mit Hilfe des Speed Mixers DAC 150 FVZ (Firma Hauschild) für 1 min bei 2.000 U/min homogenisiert, bezeichnet Z Anti

Für das Vergleichsbeispiel VGAnti wurden analog VG13 und VG2 verwendet.

Diese Zusammensetzung Z Anti und Vergleichsbeispiel VGAnti wurden für den Rub-out-Test und für die Messung der Farbstärke entsprechend appliziert.

**Tabelle 21: Ergebnisse des Anti-Ausschwimm-Effekts**

| | | *L | *a | *b | Y | F | ΔL | Δa | Δb | ΔE |
|---|---|---|---|---|---|---|---|---|---|---|
| **VGAnti** | Vor rub-out | 50,96 | 58,5 | -6,04 | 19,23 | 169,57 | 12,46 | -5,94 | -10,74 | 17,49 |
| | Nach rub-out | 63,42 | 52,56 | -16,78 | 32,09 | 71,84 | | | | |
| **ZAnti** | Vor rub-out | 65,44 | 51,37 | -18,16 | 34,61 | 61,79 | 0,52 | -0,43 | -0,22 | 0,71 |
| | Nach rub-out | 65,96 | 50,94 | -18,38 | 35,27 | 59,39 | | | | |

Die erfindungsgemäße Zusammensetzung ZAnti weist einen sehr niedrigen delta E im Gegensatz zum Vergleichsbeispiel VGAnti auf, was auf eine gute Pigmentstabilisierung und gleichzeitig ein Anti-Schwimm Effekt hindeutet.

F stellt die Farbstärke dar. Bei dem Vergleichsbeispiel VGAnti ist eine signifikante Veränderung der Farbstärke zu erkennen, während bei der erfindungsgemäßen Zusammensetzung ZAnti die Farbstärke sich kaum verändert.

3.5 Anwendungstechnische Prüfung mit $TiO_2$ (Weißpigment)

Für die anwendungstechnische Beurteilung wurden zunächst Slurries hergestellt:
Die Slurries, eine dünne Mischung aus Wasser und sehr fein verteilten Titandioxid (Weißpgiment), werden anhand der Prüfrezeptur gemäß Tabelle 22 hergestellt. Dafür wird zuerst Wasser, Additiv, Konservierungsmittel und Weißpigment in den folgenden Verhältnissen und Reihenfolge vermengt.

**Tabelle 22: Prüfrezeptur:**

| **Komponente** | **Einwaage** |
|---|---|
| Wasser | 19,9 g |
| Additive (0,35% Additiv fest auf Pigment) | 0,7 g |
| Konservierungsmittel (Parmetol K40 der Firma Schülke) | 0,1 g |
| Weißpigment (Kronos 2190 der Firma Kronos) | 75,0 g |

Anschließend werden 75,0 g der hergestellten Mischung und 75,0 g Glasperlen in einer 150 ml Kosmetikdosen eingewogen und mit Hilfe des Speed Mixers DAC 150 FVZ (Firma Hauschild) für 5 min bei 1.300 U/min dispergiert. Nach dem Dispergierprozess wird der somit hergestellter Slurry von den Glasperlen durch einfache Filtration getrennt.

Die Slurries werden nach 2 Wochen Lagerung bei 50°C visuell begutachtet, ob ein Bodensatz vorliegt oder nicht. Falls ein Bodensatz sich gebildet hat, wird für eine Quantifizierung des Bodensatzes vorschichtig das darüberstehende Medium mit einer Pipette entfernt. Somit wurde der Bodensatz der Slurry abdekantiert. Die verbleibende Menge an Bodensatz wurde gravimetrisch bestimmt. Der Prozentanteil der Bodensatzmenge berechnet sich aus der Mengen der eingewogenen Slurry dividiert durch die Menge des Bodensatzes nach Dekantierung.

Bodensatzmenge (%) = <u>Menge Slurry (g) / Menge Bodensatz nach Dekantierung (g)</u>

Anbei die entsprechende Tabelle 23 mit den entsprechenden Prozentanteilen an Bodensatz von den erfinderischen hergestellten Substanzen im Vergleich zu kommerziell erhältlichen Additiven.

Daraus ist klar erkennbar und zu entnehmen, dass die erfinderischen hergestellten Substanzen den kommerziellen erhältlichen Additiven überlegen sind. Bei den Slurries mit den erfindungsgemäßen Verbindungen hat sich kaum

Bodensatz gebildet.

**Tabelle 23: Bodensatz in Prozent**

| | **Bewertetes Additiv** | **Bodensatzmenge (in %)** |
|---|---|---|
| Vergleichsadditiv 1 | TEGO Dispers 715 W der Firma Evonik | 40 |
| Vergleichsacditiv 2 | TEGO Dispers 715 W der Firma Evonik | 40 |
| Vergleichsaddtiv 3 | Pidicryl 6400 A der Firma Pidilite | 40 |
| Vergleichsadditiv 4 | Pidicryl 6300 J der Firma Pidilite | 40 |
| Verglechsadditiv 5 | Orotan 1124 der Firma Dow | 38 |
| Erfindungsgem. | 9 B | < 5 |
| Erfindungsgem. | 9 C | < 5 |
| Erfindungsgem. | 10 C | < 5 |

**Patentansprüche**

1. Aminfreie Polyadditionsverbindungen und deren Salze erhältlich durch die Umsetzung von

- Epoxidharz auf Basis von mindestens einem Diglycidylether gemäß der Formel (I)

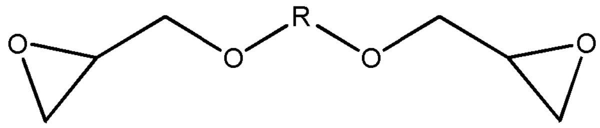

Formel (I)

mit R = einen zweiwertigen aliphatischen oder einkernigen aromatischen oder zweikernigen aromatischen Rest oder Mischungen davon,
- mit mindestens einem Polyetheralkohol der allgemeinen Formel (II)

$R^1$-$[OEt]_n$-$[OPr]_m$-$[OBu]_s$-$[OSO]_r$-OH Formel (II),

mit $R^1$ = unabhängig voneinander gleiche oder verschiedene lineare oder verzweigte, gegebenenfalls aromatische Kohlenwasserstoffreste mit 1 bis 18 Kohlenstoffatomen, bevorzugt Methyl, Butyl, Octyl, Decyl, Dodecyl, Tetradecyl, Octadecyl oder Mischungen davon,
mit [OEt] = Ethylenoxid-Rest.
mit [OPr] = Propylenoxid-Rest,
mit [OBu] = Butylenoxid-Rest,
mit [OSO] = Styroloxid-Rest,
mit n = 0 bis 100, bevorzugt n = 1 - 80, besonders bevorzugt n = 10 - 50,
m = 0 bis 50, bevorzugt m = 0 - 35, besonders bevorzugt m = 0 - 25,
s = 0 bis 20, bevorzugt s = 0 - 15, besonders bevorzugt s = 0 - 10 und
r = 0 bis 3,
mit der Maßgabe, dass n+m+s+r = 3 - 103, bevorzugt n+m+s+r = 4 - 60, besonders bevorzugt n+m+s+r = 5 - 40 beträgt,
und

- mit mindestens einer Verbindung, die mindestens eine funktionelle Gruppe ausgewählt aus Sulfatgruppen, Sulfonatgruppen, Carboxylatgruppen oder Phosphatgruppen enthält.

2. Aminfreie Polyadditionsverbindungen nach Anspruch 1, **dadurch gekennzeichnet, dass** der Diglycidylether gemäß der Formel (I) ausgewählt ist aus Diglycidylethern von difunktionellen gesättigten oder ungesättigten, verzweigten

oder unverzweigten, zyklischen oder offenkettigen C2-C30-Alkoholen, wie z. B. Ethylenglykol, Butandiol, Hexandiol, Oktandiolgylcidylethern, Cyclohexandimethanoldiglycidylethern oder Neopentylglycoldiglycidylethern, aus Diglycidylethern von difunktionellen, nieder- bis hochmolekularen Polyetherpolyolen, wie z. B. Polyethylenglycol-diglycidylethern oder Polypropyleneglycol-diglycidylethern, oder aus Diglycidylethern von difunktionellen unsubstituierten oder substituierten, einkernigen, mehrkernigen und/oder kondensierten Diphenolen oder Triphenolen, ausgewählt aus 1,4-Dihydroxybenzol, 1,3-Dihy- droxybenzol, 1,2-Dihydroxybenzol, 1,3-Dihydroxytoluol, 3,5-Dihydroxybenzoat, 2,2- Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxy- naphthalin, Dihydroxyanthrachinon, Dihydroxy-biphenyl, 3,3-Bis(p-hydroxyphenyl)-phthalide, 5,5-Bis(4-hydroxyphenyl)hexahydro-4,7-methanoindan, Phenolpthalein, Fluorescein, 4,4'-[Bis-(hydroxyphenyl)-l,3-phenylenebis-(l-methyl-ethyliden)] (=Bisphenol-M), 4,4'-[Bis-(hydroxyphenyl)-l,4-phenylenebis-(l-methyl-ethyliden)] (=Bisphenol-P), 2,2'-Diallyl-bisphenol-A.

**3.** Aminfreie Polyadditionsverbindungen nach Anspruch 1, **dadurch gekennzeichnet, dass** die Umsetzung in Gegenwart von Umsetzungskatalysatoren durchgeführt wird.

**4.** Aminfreie Polyadditionsverbindungen nach Anspruch 2, **dadurch gekennzeichnet, dass** der Umsetzungskatalysator ausgewählt ist aus Natriumhydroxid, Kaliumhydroxid, Lithiumhydroxid, Bariumhydroxid, Strontiumhydroxid, Alkalialkoholate wie Natriummethylat, Kaliumethylat, Lithiummethylat, Natriumethylat und Kaliumdodecylat sowie die Alkalisalze von Carbonsäuren, wie zum Beispiel Natrium- und Lithiumstearat, anorganische und organische Protonsäuren, zum Beispiel Phosphorsäure, Tetrafluorborsäure und Benzolsulfonsäure. Lewis-Säuren und deren Komplexe, wie Zinn(IV)chlorid, Titan(IV)chlorid, Titan(IV)isopropylat, Triäthyloxoniumtetrafluoroborat, und aliphatische, cycloaliphatische araliphatische Stickstoff-Heterocyclen.

**5.** Aminfreie Polyadditionsverbindungen nach Anspruch 1, **dadurch gekennzeichnet, dass** die funktionelle Gruppen enthaltene Verbindung ausgewählt ist aus Schwefelsäure, Chlorsulfonsäure oder Schwefeltrioxid zur Bildung von Sulfatgruppen, Polyphosphorsäure, Phosphorsäure, Phosphorpentoxid oder Phosphorpentachlorid zur Bildung von Phoshatgruppen, Säureandydrid oder Chloressigsäure zur Bildung von Carboxylatgruppen, Propansulton, Butansulton oder 3-Chloro-2-hydroxypropansulfonsäure zur Bildung von Sulfonatgruppen, und/oder deren Salze.

**6.** Verfahren zur Herstellung von aminfreien Polyadditionsverbindungen und deren Salzen, **dadurch gekennzeichnet, dass**

- Epoxidharze auf Basis von mindestens einem Diglycidylether gemäß der Formel (I)

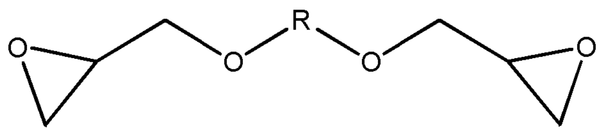

Formel (I)

mit R = einen zweiwertigen aliphatischen oder einkernigen aromatischen oder zweikernigen aromatischen Rest oder Mischungen davon,
- mit mindestens einem Polyetheralkohol der allgemeinen Formel (II)

$R^1$-$[OEt]_n$-$[OPr]_m$-$[OBu]_s$-$[OSO]_r$-OH Formel (II),

mit $R^1$ = unabhängig voneinander gleiche oder verschiedene lineare oder verzweigte, gegebenenfalls aromatische Kohlenwasserstoffreste mit 1 bis 18 Kohlenstoffatomen, bevorzugt Methyl, Butyl, Octyl, Decyl, Dodecyl, Tetradecyl, Octadecyl oder Mischungen davon,
mit [OEt] = Ethylenoxid-Rest,
mit [OPr] = Propylenoxid-Rest,
mit [OBu] = Butylenoxid-Rest,
mit [OSO] = Styroloxid-Rest,
mit n = 0 bis 100, bevorzugt n = 1 - 80, besonders bevorzugt n = 10 - 50,
m = 0 bis 50, bevorzugt m = 0 - 35, besonders bevorzugt m = 0 - 25,
s = 0 bis 20, bevorzugt s = 0 - 15, besonders bevorzugt s = 0 - 10 und
r = 0 bis 3,

mit der Maßgabe, dass n+m+s+r = 3 - 103, bevorzugt n+m+s+r = 4 - 60, besonders bevorzugt n+m+s+r = 5 - 40 beträgt,
bei einer Temperatur zwischen 25°C und 300 °C, bevorzugt 40°C und 200°C, besonders bevorzugt 50°C und 100°C zur Reaktion gebracht werden, anschließend mit mindestens einer Verbindung, die mindestens eine funktionelle Gruppe ausgewählt aus Sulfatgruppen, Sulfonatgruppen, Carboxylatgruppen oder Phosphatgruppen enthält, umgesetzt wird.

7. Verfahren nach Anspruch 6, **dadurch gekennzeichnet, dass** das molare Verhältnis der Epoxy-Gruppen von Diglycidylether gemäß Formel (I) zu den OH-Gruppen der Polyetheralkohole gemäß Formel (II) 1,0 : 0,5 bis 1,0 : 4,0, bevorzugt 1,0 : 1,0 bis 1,0 : 2,0 beträgt.

8. Verfahren nach Anspruch 6, **dadurch gekennzeichnet, dass** die funktionelle Gruppen enthaltene Verbindung ausgewählt ist aus Schwefelsäure, Chlorsulfonsäure oder Schwefeltrioxid zur Bildung von Sulfatgruppen, Polyphosphorsäure, Phosphorsäure, Phosphorpentoxid oder Phosphorpentachlorid zur Bildung von Phoshatgruppen, Säureandydrid oder Chloressigsäure zur Bildung von Carboxylatgruppen, Propansulton, Butansulton oder 3-Chloro-2-hydroxy-propansulfonsäure zur Bildung von Sulfonatgruppen, und/oder deren Salze.

9. Verfahren nach Anspruch 8, **dadurch gekennzeichnet, dass** die Hydroxygruppen der Polyetheralkohole gemäß Formel (II) partiell oder vollständig zu Phosphatgruppen, Sulfatgruppen, Sulfanotgruppen oder Carboxylategruppen umgesetzt werden.

10. Verfahren nach einem der vorgenannten Ansprüche, **dadurch gekennzeichnet, dass** die Umsetzung in Gegenwart von Umsetzungskatalysatoren durchgeführt wird.

11. Verfahren nach Anspruch 10, **dadurch gekennzeichnet, dass** der Umsetzungskatalysator ausgewählt ist aus Natriumhydroxid, Kaliumhydroxid, Lithiumhydroxid, Bariumhydroxid, Strontiumhydroxid, Alkalialkoholate wie Natriummethylat, Kaliumethylat, Lithiummethylat, Natriumethylat und Kaliumdodecylat sowie die Alkalisalze von Carbonsäuren, wie zum Beispiel Natrium- und Lithiumstearat, anorganische und organische Protonsäuren, zum Beispiel Phosphorsäure, Tetrafluorborsäure und Benzolsulfonsäure. Lewis-Säuren und deren Komplexe, wie Zinn(IV)chlorid, Titan(IV)chlorid, Titan(IV)isopropylat, Triäthyloxoniumtetrafluoroborat, und aliphatische, cycloaliphatische, araliphatische Stickstoff-Heterocyclen.

12. Verfahren nach Anspruch 6, **dadurch gekennzeichnet, dass** der Diglycidylether gemäß der Formel (I) ausgewählt ist aus Diglycidylethern von difunktionellen gesättigten oder ungesättigten, verzweigten oder unverzweigten, zyklischen oder offenkettigen C2-C30-Alkoholen, ausgewählt aus Ethylenglykol, Butandiol, Hexandiol, Oktandiolgylcidylethern, Cyclohexandimethanoldigylcidylethern oder Neopentylglycoldiglycidylethern, aus Diglycidylethern von difunktionellen, nieder- bis hochmolekularen Polyetherpolyolen, ausgewählt aus Polyethylenglycol-diglycidylethern oder Polypropyleneglycol-diglycidylethern, oder aus Diglycidylethern von difunktionellen unsubstituierten oder substituierten, einkernigen, mehrkernigen und/oder kondensierten Diphenolen oder Triphenolen, ausgewählt aus 1,4-Dihydroxybenzol, 1,3-Dihy-droxybenzol, 1,2-Dihydroxybenzol, 1,3-Dihydroxytoluol, 3,5-Dihydroxybenzoat, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxy- naphthalin, Dihydroxyanthrachinon, Dihydroxy-biphenyl, 3,3-Bis(p-hydroxyphenyl)-phthalide, 5,5-Bis(4-hydroxyphenyl)hexahydro-4,7-methanoindan, Phenolpthalein, Fluorescein, 4,4'-[Bis-(hydroxyphenyl)-I,3-phenylenebis-(I-methyl-ethyliden)] (=Bisphenol-M), 4,4'-[Bis-(hydroxyphenyl)-I,4-phenylenebis-(I-methyl-ethyliden)] (=Bisphenol-P), 2,2'-Diallyl-bisphenol-A.

13. Zusammensetzung enthaltend mindestens einen teilchenförmigen Feststoff und Polyadditionsverbindungen und/oder deren Salze nach einem der Ansprüche 1 bis 5.

14. Zusammensetzung nach Anspruch 13, **dadurch gekennzeichnet, dass** sie als wässrige und/oder lösungsmittelhaltige Systeme eine Fließgrenze aufweist.

15. Zusammensetzung nach Anspruch 14, **dadurch gekennzeichnet, dass** sie eine Fließgrenze, ermittelt nach DIN 1342-1 2003 11 und DIN Fachbericht 143, mit einem Wert von $\tau$ in PA = 0,1 - 400, bevorzugt $\tau$ in PA = 0,1 - 100, besonders bevorzugt $\tau$ in PA = 0,1 - 50 und bei einer 24h Lagerung bei Raumtemperatur keinen Bodensatz aufweist.

16. Zusammensetzung nach Anspruch 14, **dadurch gekennzeichnet, dass** sie einen Anti-Aufschwimm Effekt aufweist.

**17.** Verwendung der Zusammensetzung nach einem der vorgenannten Ansprüche 13 - 15 zur Herstellung von Dispersionen, Mahlgütern, Farben, Lacken oder Drucktinten, Inkjet Anreibeharz oder Pigmentkonzentraten.

**18.** Verwendung der Polyadditionsverbindungen und deren Salze nach Ansprüche 1 - 5 als Netz- oder Dispergiermittel, als Dispersionsstabilisatoren, als Anti-Absetzmittel, als Rheologieadditiv, als Beschichtungsmittel.

## Claims

**1.** Amine-free polyaddition compounds and salts thereof, obtainable by the reaction of

- epoxy resin based on at least one diglycidyl ether of the formula (I)

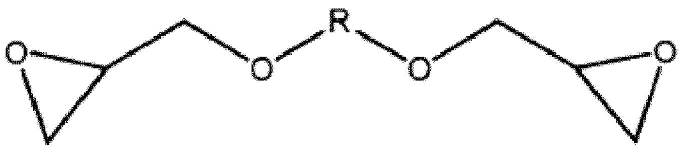

Formula (I)

with R = a divalent aliphatic or monocyclic aromatic or bicyclic aromatic radical or mixtures thereof
- with at least one polyether alcohol of the general formula (II)

$$R^1\text{-}[OEt]_n\text{-}[OPr]_m\text{-}[OBu]_s\text{-}[OSO]_r\text{-}OH \quad \text{Formula} \quad (II)$$

with $R^1$ = independently identical or different, linear or branched, optionally aromatic hydrocarbyl radicals having 1 to 18 carbon atoms, preferably methyl, butyl, octyl, decyl, dodecyl, tetradecyl, octadecyl or mixtures thereof,
with [OEt] = ethylene oxide radical,
with [OPr] = propylene oxide radical,
with [OBu] = butylene oxide radical,
with [OSO] = styrene oxide radical,
with n = 0 to 100, preferably n = 1-80, more preferably n = 10-50,
m = 0 to 50, preferably m = 0-35, more preferably m = 0-25,
s = 0 to 20, preferably s = 0-15, more preferably s = 0-10 and
r = 0 to 3,
with the proviso that n+m+s+r = 3-103, preferably n+m+s+r = 4-60, more preferably n+m+s+r = 5-40, and

- with at least one compound containing at least one functional group selected from sulfate groups, sulfonate groups, carboxylate groups and phosphate groups.

**2.** Amine-free polyaddition compounds according to Claim 1, **characterized in that** the diglycidyl ether of the formula (I) is selected from diglycidyl ethers of difunctional saturated or unsaturated, branched or unbranched, cyclic or open-chain C2-C30 alcohols, for example ethylene glycol, butanediol, hexanediol, octanediol glycidyl ethers, cyclohexanedimethanol diglycidyl ethers and neopentyl glycol diglycidyl ethers, from diglycidyl ethers of difunctional polyether polyols of low to high molecular weight, for example polyethylene glycol diglycidyl ethers or polypropylene glycol diglycidyl ethers, or from diglycidyl ethers of difunctional unsubstituted or substituted, monocyclic, polycyclic and/or fused diphenols or triphenols selected from 1,4-dihydroxybenzene, 1,3-dihydroxybenzene, 1,2-dihydroxybenzene, 1,3-dihydroxytoluene, 3,5-dihydroxybenzoate, 2,2-bis(4-hydroxyphenyl)propane (= bisphenol A), bis(4-hydroxyphenyl)methane (= bisphenol F), bis(4-hydroxyphenyl) sulfone (= bisphenol S), naphthoresorcinol, dihydroxynaphthalene, dihydroxyanthraquinone, dihydroxybiphenyl, 3,3-bis(p-hydroxyphenyl)phthalide, 5,5-bis(4-hydroxyphenyl)hexahydro-4,7-methanoindane, phenolphthalein, fluorescein, 4,4'-[bis(hydroxyphenyl)-1,3-phenylenebis(1-methylethylidene)] (= bisphenol M), 4,4'-[bis(hydroxyphenyl)-1,4-phenylenebis(1-methylethylidene)] (= bisphenol P), 2,2'-diallyl bisphenol A.

**3.** Amine-free polyaddition compounds according to Claim 1, **characterized in that** the reaction is conducted in the

presence of reaction catalysts.

4. Amine-free polyaddition compounds according to Claim 2, **characterized in that** the reaction catalyst is selected from sodium hydroxide, potassium hydroxide, lithium hydroxide, barium hydroxide, strontium hydroxide, alkali metal alkoxides such as sodium methoxide, potassium ethoxide, lithium methoxide, sodium ethoxide and potassium dodecoxide, and the alkali metal salts of carboxylic acids, for example sodium stearate and lithium stearate, inorganic and organic protic acids, for example phosphoric acid, tetrafluoroboric acid and benzenesulfonic acid, Lewis acids and complexes thereof, such as tin(IV) chloride, titanium(IV) chloride, titanium(IV) isopropoxide, triethyloxonium tetrafluoroborate and aliphatic, cycloaliphatic, araliphatic nitrogen heterocycles.

5. Amine-free polyaddition compounds according to Claim 1, **characterized in that** the compound containing functional groups is selected from sulfuric acid, chlorosulfonic acid and sulfur trioxide for formation of sulfate groups, polyphosphoric acid, phosphoric acid, phosphorus pentoxide and phosphorus pentachloride for formation of phosphate groups, acid anhydride and chloroacetic acid for formation of carboxylate groups, propane sultone, butane sultone and 3-chloro-2-hydroxypropanesulfonic acid for formation of sulfonate groups, and/or salts thereof.

6. Process for preparing amine-free polyaddition compounds and salts thereof, **characterized in that**

- epoxy resins based on at least one diglycidyl ether of the formula (I)

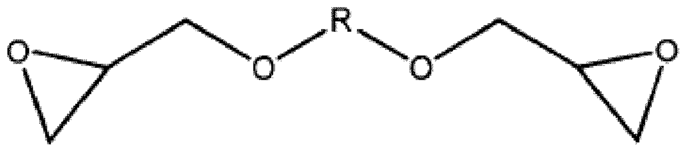

Formula (I)

with R = a divalent aliphatic or monocyclic aromatic or bicyclic aromatic radical or mixtures thereof are reacted
- with at least one polyether alcohol of the general formula (II)

$$R^1\text{-[OEt]}_n\text{-[OPr]}_m\text{-[OBu]}_s\text{-[OSO]}_r\text{-OH} \quad \text{Formula (II)}$$

with $R^1$ = independently identical or different, linear or branched, optionally aromatic hydrocarbyl radicals having 1 to 18 carbon atoms, preferably methyl, butyl, octyl, decyl, dodecyl, tetradecyl, octadecyl or mixtures thereof,
with [OEt] = ethylene oxide radical,
with [OPr] = propylene oxide radical,
with [OBu] = butylene oxide radical,
with [OSO] = styrene oxide radical,
with n = 0 to 100, preferably n = 1-80, more preferably n = 10-50,
m = 0 to 50, preferably m = 0-35, more preferably m = 0-25,
s = 0 to 20, preferably s = 0-15, more preferably s = 0-10 and
r = 0 to 3,
with the proviso that n+m+s+r = 3-103, preferably n+m+s+r = 4-60, more preferably n+m+s+r = 5-40,
at a temperature between 25°C and 300°C, preferably 40°C and 200°C, more preferably 50°C and 100°C, then reacted with at least one compound containing at least one functional group selected from sulfate groups, sulfonate groups, carboxylate groups and phosphate groups.

7. Process according to Claim 6, **characterized in that** the molar ratio of the epoxy groups of diglycidyl ether of formula (I) to the OH groups of the polyether alcohols of formula (II) is 1.0:0.5 to 1.0:4.0, preferably 1.0:1.0 to 1.0:2.0.

8. Process according to Claim 6, **characterized in that** the compound containing functional groups is selected from sulfuric acid, chlorosulfonic acid and sulfur trioxide for formation of sulfate groups, polyphosphoric acid, phosphoric acid, phosphorus pentoxide and phosphorus pentachloride for formation of phosphate groups, acid anhydride and chloroacetic acid for formation of carboxylate groups, propane sultone, butane sultone and 3-chloro-2-hydroxypropanesulfonic acid for formation of sulfonate groups, and/or salts thereof.

**9.** Process according to Claim 8, **characterized in that** the hydroxyl groups in the polyether alcohols of formula (II) are partially or fully converted to phosphate groups, sulfate groups, sulfonate groups or carboxylate groups.

**10.** Process according to any of the preceding claims, **characterized in that** the reaction is conducted in the presence of reaction catalysts.

**11.** Process according to Claim 10, **characterized in that** the reaction catalyst is selected from sodium hydroxide, potassium hydroxide, lithium hydroxide, barium hydroxide, strontium hydroxide, alkali metal alkoxides such as sodium methoxide, potassium ethoxide, lithium methoxide, sodium ethoxide and potassium dodecoxide, and the alkali metal salts of carboxylic acids, for example sodium stearate and lithium stearate, inorganic and organic protic acids, for example phosphoric acid, tetrafluoroboric acid and benzenesulfonic acid, Lewis acids and complexes thereof, such as tin(IV) chloride, titanium(IV) chloride, titanium(IV) isopropoxide, triethyloxonium tetrafluoroborate and aliphatic, cycloaliphatic, araliphatic nitrogen heterocycles.

**12.** Process according to Claim 6, **characterized in that** the diglycidyl ether of the formula (I) is selected from diglycidyl ethers of difunctional saturated or unsaturated, branched or unbranched, cyclic or open-chain C2-C30 alcohols, selected from ethylene glycol, butanediol, hexanediol, octanediol glycidyl ethers, cyclohexanedimethanol diglycidyl ethers and neopentyl glycol diglycidyl ethers, from diglycidyl ethers of difunctional polyether polyols of low to high molecular weight, selected from polyethylene glycol diglycidyl ethers or polypropylene glycol diglycidyl ethers, or from diglycidyl ethers of difunctional unsubstituted or substituted, monocyclic, polycyclic and/or fused diphenols or triphenols selected from 1,4-dihydroxybenzene, 1,3-dihydroxybenzene, 1,2-dihydroxybenzene, 1,3-dihydroxytoluene, 3,5-dihydroxybenzoate, 2,2-bis(4-hydroxyphenyl)propane (= bisphenol A), bis(4-hydroxyphenyl)methane (= bisphenol F), bis(4-hydroxyphenyl) sulfone (= bisphenol S), naphthoresorcinol, dihydroxynaphthalene, dihydroxyanthraquinone, dihydroxybiphenyl, 3,3-bis(p-hydroxyphenyl)phthalide, 5,5-bis(4-hydroxyphenyl)hexahydro-4,7-methanoindane, phenolphthalein, fluorescein, 4,4'-[bis(hydroxyphenyl)-1,3-phenylene-bis(1-methylethylidene)] (= bisphenol M), 4,4'-[bis(hydroxyphenyl)-1,4-phenylenebis(1-methyl-ethylidene)] (= bisphenol P), 2,2'-diallyl bisphenol A.

**13.** Composition comprising at least one particulate solid and polyaddition compounds and/or salts thereof according to any of Claims 1 to 5.

**14.** Composition according to Claim 13, **characterized in that**, in the form of aqueous and/or solventborne systems, it has a yield point.

**15.** Composition according to Claim 14, **characterized in that** it has a yield point, determined according to DIN 1342-1 2003 11 and DIN Technical Report 143, with a value of $\tau$ in PA = 0.1-400, preferably $\tau$ in PA = 0.1-100, more preferably $\tau$ in PA = 0.1-50, and has no sediment when stored at room temperature for 24 h.

**16.** Composition according to Claim 14, **characterized in that** it has an anti-floating effect.

**17.** Use of the composition according to any of the preceding Claims 13-15 for production of dispersions, millbases, paints, varnishes or printing inks, inkjet grinding resin or pigment concentrates.

**18.** Use of the polyaddition compounds and salts thereof according to Claims 1-5 as wetting agents or dispersants, as dispersion stabilizers, as antistatic agents, as rheology additive, as coating composition.

**Revendications**

**1.** Composés de polyaddition, exempts d'amine, et leurs sels pouvant être obtenus par la transformation de

- une résine époxyde à base d'au moins un diglycidyléther selon la formule (I)

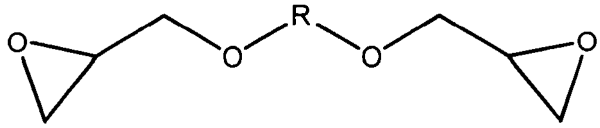

Formule (I)

dans laquelle R = un radical divalent, aliphatique ou aromatique à un noyau ou aromatique à deux noyaux ou des mélanges de ceux-ci,

- avec au moins un polyétheralcool de formule générale (II)

$R^1$-$[OEt]_n$-$[OPr]_m$-$[OBu]_s$-$[OSO]_r$-OH Formule (II),

dans laquelle $R^1$ = indépendamment, des radicaux hydrocarbonés identiques ou différents, linéaires ou ramifiés, le cas échéant aromatiques, comprenant 1 à 18 atomes de carbone, de préférence méthyle, butyle, octyle, décyle, dodécyle, tétradécyle, octadécyle ou des mélanges de ceux-ci ;
dans laquelle [OEt] = radical d'oxyde d'éthylène, dans laquelle [OPr] = radical d'oxyde de propylène, dans laquelle [OBu] = radical d'oxyde de butylène, dans laquelle [OSO] = radical d'oxyde de styrène, dans laquelle n = 0 à 100, de préférence n = 1-80, de manière particulièrement préférée n = 10-50, m = 0 à 50, de préférence m = 0-35, de manière particulièrement préférée m = 0-25, s = 0 à 20, de préférence s = 0-15, de manière particulièrement préférée s = 0-10 et r = 0 à 3,
à condition que n + m + s + r = 3-103, de préférence n + m + s + r = 4-60, de manière particulièrement préférée n + m + s + r = 5-40 et

- avec au moins un composé qui contient au moins un groupe fonctionnel choisi parmi les groupes sulfate, les groupes sulfonate, les groupes carboxylate ou les groupes phosphate.

**2.** Composés de polyaddition, exempts d'amine, selon la revendication 1, **caractérisés en ce que** le diglycidyléther selon la formule (I) est choisi parmi les diglycidyléthers d'alcools en C2-C30 difonctionnels, saturés ou insaturés, ramifiés ou non ramifiés, cycliques ou à chaîne ouverte, tels que par exemple l'éthylèneglycol, le butanediol, l'hexanediol, les octanediolglycidyléthers, les cyclohexanediméthanoldigylcidyléthers ou les néopentylglycoldiglycidyléthers, parmi les diglycidyléthers de polyétherpolyols difonctionnels, de bas poids moléculaire ou de poids moléculaire élevé, tels que par exemple les polyéthylèneglycoldiglycidyléthers ou les polypropylèneglycoldiglycidyléthers, ou parmi les diglycidyléthers de diphénols ou de triphénols difonctionnels, non substitués ou substitués, à un noyau, à plusieurs noyaux et/ou condensés, choisis parmi le 1,4-dihydroxybenzène, le 1,3-dihydroxybenzène, le 1,2-dihydroxybenzène, le 1,3-dihydroxytoluène, le 3,5-dihydroxybenzoate, le 2,2-bis(4-hydroxyphényl)propane (= Bisphénol-A), le bis(4-hydroxyphényl)méthane (= Bisphénol-F), la bis(4-hydroxyphényl)sulfone (= Bisphénol-S), le naphtorésorcinol, le dihydroxynaphtalène, la dihydroxyanthraquinone, le dihydroxybiphényle, le 3,3-bis(p-hydroxyphényl)-phtalide, le 5,5-bis(4-hydroxyphényl)hexahydro-4,7-méthano-indane, la phénolphtaléine, la fluorescéine, le 4,4'-[bis-(hydroxyphényl)-1,3-phénylène-bis-(1-méthyléthylidène)] (= Bisphénol-M), le 4,4'-[bis-(hydroxyphényl)-1,4-phénylène-bis-(1-méthyléthylidène)] (= Bisphénol-P), le 2,2'-diallylbisphénol-A.

**3.** Composés de polyaddition, exempts d'amine, selon la revendication 1, **caractérisés en ce que** la transformation est réalisée en présence de catalyseurs de transformation.

**4.** Composés de polyaddition, exempts d'amine, selon la revendication 2, **caractérisés en ce que** le catalyseur de transformation est choisi parmi l'hydroxyde de sodium, l'hydroxyde de potassium, l'hydroxyde de lithium, l'hydroxyde de baryum, l'hydroxyde de strontium, les alcoolates de métal alcalin, tels que le méthylate de sodium, le méthylate de potassium, le méthylate de lithium, l'éthylate de sodium et le dodécylate de potassium ainsi que les sels alcalins d'acides carboxyliques, tels que par exemple le stéarate de sodium et de lithium, les acides protoniques inorganiques et organiques, par exemple l'acide phosphorique, l'acide tétrafluoroborique et l'acide benzènesulfonique, les acides de Lewis et leurs complexes, tels que le chlorure d'étain (IV), le chlorure de titane (IV), l'isopropylate de titane (IV), le tétrafluoroborate de triéthyloxonium et les hétérocycles azotés aliphatiques, cycloaliphatiques et araliphatiques.

**5.** Composés de polyaddition, exempts d'amine, selon la revendication 1, **caractérisés en ce que** le composé contenant des groupes fonctionnels est choisi parmi l'acide sulfurique, l'acide chlorosulfonique ou le trioxyde de soufre pour la formation de groupes sulfate, l'acide polyphosphorique, l'acide phosphorique, le pentoxyde de phosphore

ou le pentachlorure de phosphore pour la formation de groupes phosphate, l'anhydride acide ou l'acide chloroacétique pour la formation de groupes carboxylate, le propanesultone, le butanesultone ou l'acide 3-chloro-2-hydroxypropanesulfonique pour la formation de groupes sulfonate et/ou leurs sels.

**6.** Procédé pour la préparation de composés de polyaddition, exempts d'amine, et de leurs sels, **caractérisé en ce qu'**on fait réagir

- des résines époxyde à base d'au moins un diglycidyléther selon la formule (I)

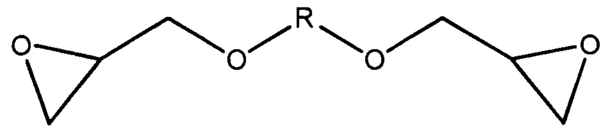

Formule (I)

dans laquelle R = un radical divalent, aliphatique ou aromatique à un noyau ou aromatique à deux noyaux ou des mélanges de ceux-ci,
- avec au moins un polyétheralcool de formule générale (II)

$R^1$-$[OEt]_n$-$[OPr]_m$-$[OBu]_s$-$[OSO]_r$-OH Formule (II),

dans laquelle $R^1$ = indépendamment, des radicaux hydrocarbonés identiques ou différents, linéaires ou ramifiés, le cas échéant aromatiques, comprenant 1 à 18 atomes de carbone, de préférence méthyle, butyle, octyle, décyle, dodécyle, tétradécyle, octadécyle ou des mélanges de ceux-ci ;
dans laquelle [OEt] = radical d'oxyde d'éthylène, dans laquelle [OPr] = radical d'oxyde de propylène, dans laquelle [OBu] = radical d'oxyde de butylène, dans laquelle [OSO] = radical d'oxyde de styrène, dans laquelle n = 0 à 100, de préférence n = 1-80, de manière particulièrement préférée n = 10-50, m = 0 à 50, de préférence m = 0-35, de manière particulièrement préférée m = 0-25, s = 0 à 20, de préférence s = 0-15, de manière particulièrement préférée s = 0-10 et r = 0 à 3,

à condition que n + m + s + r = 3-103, de préférence n + m + s + r = 4-60, de manière particulièrement préférée n + m + s + r = 5-40,
à une température entre 25°C et 300°C, de préférence entre 40°C et 200°C, de manière particulièrement préférée entre 50°C et 100°C, puis on transforme avec au moins un composé qui contient au moins un groupe fonctionnel choisi parmi les groupes sulfate, les groupes sulfonate, les groupes carboxylate ou les groupes phosphate.

**7.** Procédé selon la revendication 6, **caractérisé en ce que** le rapport molaire des groupes époxy de diglycidyléthers selon la formule (I) aux groupes OH des polyétheralcools selon la formule (II) vaut 1,0:0,5 à 1,0:4,0, de préférence 1,0:1,0 à 1,0:2,0.

**8.** Procédé selon la revendication 6, **caractérisé en ce que** le composé contenant des groupes fonctionnels est choisi parmi l'acide sulfurique, l'acide chlorosulfonique ou le trioxyde de soufre pour la formation de groupes sulfate, l'acide polyphosphorique, l'acide phosphorique, le pentoxyde de phosphore ou le pentachlorure de phosphore pour la formation de groupes phosphate, l'anhydride acide ou l'acide chloroacétique pour la formation de groupes carboxylate, le propanesultone, le butanesultone ou l'acide 3-chloro-2-hydroxypropanesulfonique pour la formation de groupes sulfonate et/ou leurs sels.

**9.** Procédé selon la revendication 8, **caractérisé en ce que** les groupes hydroxy des polyétheralcools selon la formule (II) sont transformés partiellement ou complètement en groupes phosphate, en groupes sulfate, en groupes sulfonate ou en groupes carboxylate.

**10.** Procédé selon l'une quelconque des revendications susmentionnées, **caractérisé en ce que** la transformation est réalisée en présence de catalyseurs de transformation.

**11.** Procédé selon la revendication 10, **caractérisé en ce que** le catalyseur de transformation est choisi parmi l'hydroxyde

de sodium, l'hydroxyde de potassium, l'hydroxyde de lithium, l'hydroxyde de baryum, l'hydroxyde de strontium, les alcoolates de métal alcalin, tels que le méthylate de sodium, le méthylate de potassium, le méthylate de lithium, l'éthylate de sodium et le dodécylate de potassium ainsi que les sels alcalins d'acides carboxyliques, tels que par exemple le stéarate de sodium et de lithium, les acides protoniques inorganiques et organiques, par exemple l'acide phosphorique, l'acide tétrafluoroborique et l'acide benzènesulfonique, les acides de Lewis et leurs complexes, tels que le chlorure d'étain (IV), le chlorure de titane (IV), l'isopropylate de titane (IV), le tétrafluoroborate de triéthyloxonium et les hétérocycles azotés aliphatiques, cycloaliphatiques et araliphatiques.

**12.** Procédé selon la revendication 6, **caractérisé en ce que** le diglycidyléther selon la formule (I) est choisi parmi les diglycidyléthers d'alcools en C2-C30 difonctionnels, saturés ou insaturés, ramifiés ou non ramifiés, cycliques ou à chaîne ouverte, choisis parmi l'éthylèneglycol, le butanediol, l'hexanediol, les octanediolglycidyléthers, les cyclohexanediméthanoldigylcidyléthers ou les néopentylglycoldiglycidyléthers, parmi les diglycidyléthers de polyétherpolyols difonctionnels, de bas poids moléculaire ou de poids moléculaire élevé, tels que par exemple les polyéthylèneglycoldiglycidyléthers ou les polypropylèneglycoldiglycidyléthers, ou parmi les diglycidyléthers de diphénols ou de triphénols difonctionnels, non substitués ou substitués, à un noyau, à plusieurs noyaux et/ou condensés, choisis parmi le 1,4-dihydroxybenzène, le 1,3-dihydroxybenzène, le 1,2-dihydroxybenzène, le 1,3-dihydroxytoluène, le 3,5-dihydroxybenzoate, le 2,2-bis(4-hydroxyphényl)propane (= Bisphénol-A), le bis(4-hydroxyphényl)méthane (= Bisphénol-F), la bis(4-hydroxyphényl)sulfone (= Bisphénol-S), le naphtorésorcinol, le dihydroxynaphtalène, la dihydroxyanthraquinone, le dihydroxybiphényle, le 3,3-bis(p-hydroxyphényl)-phtalide, le 5,5-bis(4-hydroxyphényl)hexahydro-4,7-méthano-indane, la phénolphtaléine, la fluorescéine, le 4,4'-[bis-(hydroxyphényl)-1,3-phénylène-bis-(1-méthyléthylidène)] (= Bisphénol-M), le 4,4'-[bis-(hydroxyphényl)-1,4-phénylène-bis-(1-méthyléthylidène)] (= Bisphénol-P), le 2,2'-diallylbisphénol-A.

**13.** Composition contenant au moins une charge particulaire et des composés de polyaddition et/ou leurs sels selon l'une quelconque des revendications 1 à 5.

**14.** Composition selon la revendication 13, **caractérisée en ce qu'**elle présente, en tant que système aqueux et/ou contenant un solvant, une limite d'écoulement.

**15.** Composition selon la revendication 14, **caractérisée en ce qu'**elle présente une limite d'écoulement, déterminée selon la norme DIN 1342-1 2003 11 et le rapport technique DIN 143, présentant une valeur de $\tau$ en Pa = 0,1-400, de préférence $\tau$ en Pa = 0,1-100, de manière particulièrement préférée $\tau$ en Pa = 0,1-50 et ne présente pas de dépôt lors d'un stockage pendant 24 heures à température ambiante.

**16.** Composition selon la revendication 14, **caractérisée en ce qu'**elle présente un effet antiflottaison.

**17.** Utilisation de la composition selon l'une quelconque des revendications susmentionnées 13-15 pour la préparation de dispersions, de produits broyés, de peintures, de laques ou d'encres d'imprimerie, de résines broyées pour jet d'encre ou de concentrats pigmentaires.

**18.** Utilisation des composés de polyaddition et de leurs sels selon les revendications 1-5 comme agents mouillants ou de dispersion, comme stabilisants de dispersion, comme agents antidépôt, comme additifs de rhéologie, comme agents de revêtement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0318999 A
- WO 9312187 A1
- EP 1486524 A1
- EP 1745104 A1
- WO 2016059066 A
- GB 1508576 A
- GB 2108143 A

### In der Beschreibung aufgeführte Nicht-Patentliteratur

- **VON CROWLEY et al.** A Three Dimensional Approach to Solubility. *Journal of Paint Technology,* 1966, vol. 38